(19) Europäisches Patentamt / European Patent Office / Office européen des brevets

(11) EP 4 624 198 A1

(12) **EUROPEAN PATENT APPLICATION**
published in accordance with Art. 153(4) EPC

(43) Date of publication:
**01.10.2025 Bulletin 2025/40**

(21) Application number: **23894603.2**

(22) Date of filing: **21.11.2023**

(51) International Patent Classification (IPC):
***B60C 9/00*** *(2006.01)* ***B60C 1/00*** *(2006.01)*
***C08L 7/00*** *(2006.01)* ***C08L 9/06*** *(2006.01)*
***C08L 15/00*** *(2006.01)*

(52) Cooperative Patent Classification (CPC):
**B60C 1/00; B60C 9/00; C08L 7/00; C08L 9/06; C08L 15/00**

(86) International application number:
**PCT/JP2023/041877**

(87) International publication number:
**WO 2024/111598 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 JP 2022188759**

(71) Applicant: **BRIDGESTONE CORPORATION**
**Chuo-ku**
**Tokyo 104-8340 (JP)**

(72) Inventors:
- **KAWASHIMA Masahiro**
  **Tokyo 104-8340 (JP)**
- **GIZA Emil**
  **Tokyo 104-8340 (JP)**

(74) Representative: **Marks & Clerk LLP**
**15 Fetter Lane**
**London EC4A 1BW (GB)**

(54) **PNEUMATIC TIRE**

(57) To provide a tire that has improved wet braking performance and high fuel efficiency without reducing the cut resistance. The solution is a pneumatic tire (1) including a tread rubber layer (8) and a carcass ply (9) formed by covering PET fiber cords with a coating rubber. The tread rubber layer (8) includes a rubber component, a resin component, and a filler. The rubber component includes an isoprene skeleton rubber and a styrene-butadiene rubber. The glass transition temperature of at least one type of the styrene-butadiene rubber is lower than -40°C. The resin component has a difference of the SP value relative to that of the isoprene skeleton rubber of 1.40 $(cal/cm^3)^{1/2}$ or less. The tread rubber layer (8) satisfies formula (1): mass ratio of resin component/isoprene skeleton rubber ≥ 0.5. The carcass ply (9) has a total gauge of 1.2 mm or less. The carcass ply (9) satisfies formula (2): (A / B)/total fiber fineness ≥ 0.3.

*FIG. 1*

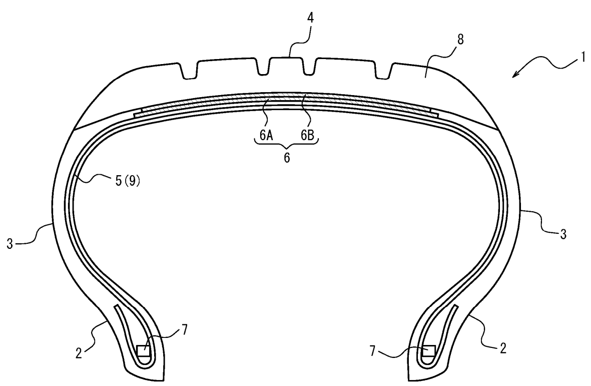


EP 4 624 198 A1

## Description

TECHNICAL FIELD

The present disclosure relates to a pneumatic tire.

BACKGROUND

BACKGROUND

Conventionally, various studies have been conducted to improve braking performance on wet road surfaces (hereinafter abbreviated as "wet braking performance"), from the perspective of improving the safety of vehicles. PTL 1 below discloses that the braking performance of a tire on both dry and wet road surfaces is improved by applying, to the tread rubber of the tire, a rubber composition obtained by blending a thermoplastic resin and a filler containing silica into a rubber component containing 70 mass% or more of natural rubber.

On the other hand, the demand for vehicles with lower fuel consumption is increasing due to the global movement towards reducing carbon dioxide emissions, driven by growing awareness of environmental issues. To address such a demand, improvement of fuel efficiency (reduction in rolling resistance) is also required for tire performances.

CITATION LIST

Patent Literature

PTL 1: WO 2015/079703 A1

SUMMARY

(Technical Problem)

However, studies conducted by the present inventors have revealed that, although the technique disclosed in PTL 1 can improve the wet braking performance of a tire, the addition of a resin serving as a softening component reduces the rigidity of the rubber, leading to a decrease in the plunger level of the tire and, in some cases, insufficient cut resistance. Furthermore, when an attempt was made to compensate for the cut resistance of the tire, the amount of a resin serving as a softening component that can be added is limited, resulting in insufficient wet braking performance in some cases.

Accordingly, it would be helpful to solve the above-mentioned problem of the prior art and to provide a tire that has improved wet braking performance and high fuel efficiency without reducing the cut resistance.

(Solution to Problem)

The primary features of the present disclosure that solves the above problem are as follows.

[1] A pneumatic tire comprising a tread rubber layer located at an outermost surface of a tread member and a carcass ply that is formed by covering PET fiber cords with a coating rubber and is located inward of the tread rubber layer in a tire radial direction,

wherein the tread rubber layer comprises a rubber component, a resin component, and a filler,
the rubber component comprises an isoprene skeleton rubber and a styrene-butadiene rubber,
a glass transition temperature of at least one type of the styrene-butadiene rubber is lower than -40°C
the resin component has a difference of an SP value relative to an SP value of the isoprene skeleton rubber of 1.40 $(cal/cm^3)^{1/2}$ or less,

The tread rubber layer satisfies the following formula (1):

$$\text{a mass ratio of the resin component / the isoprene skeleton rubber} \geq 0.5 \qquad (1),$$

a total gauge of the carcass ply is 1.2 mm or less,

the carcass ply satisfies the following formula (2):

$$(A/B)\ /\ \text{a cord total fineness} \geq 0.3 \qquad \ldots (2),$$

where A is defined as: a cord strength (N) × a fiber occupancy rate,
the fiber occupancy rate is defined as: a cross-sectional area of a PET fiber cord ($mm^2$) / (the total gauge of the carcass ply (mm) × (a diameter of a PET fiber cord (mm) + an inter-cord spacing of the PET fiber cords (mm))), and
B is defined as: tanδ of the coating rubber × a rubber occupancy rate,
the rubber occupancy rate is defined as: (1 - the fiber occupancy rate), and
the cord total fineness is a sum (dtex) of finenesses of PET fibers forming a cord.

[2] The pneumatic tire according to [1], wherein the resin component has a softening point higher than 110°C and a polystyrene-equivalent weight-average molecular weight of 200 to 1600 g/mol.
[3] The pneumatic tire according to [1] or [2], wherein the resin component comprises at least one selected from the group consisting of hydrogenated $C_5$-based resins, hydrogenated $C_5$-$C_9$-based resins, hydrogenated dicyclopentadiene-based resins, and hydrogenated terpene-based resins.
[4] The pneumatic tire according to any one of [1] to [3], wherein the styrene-butadiene rubber is modified with a modifier having a functional group containing a nitrogen atom and an alkoxy group.
[5] The pneumatic tire according to any one of [1] to [4], wherein the cord strength of the PET fiber cord is 160 N or more.
[6] The pneumatic tire according to any one of [1] to [5], wherein a tensile strength of the carcass ply is more than 2300 N/cm.
[7] The pneumatic tire according to any one of [1] to [6], wherein the fineness of the PET fiber cord is 1100/2 to 2000/2 dtex.
[8] The pneumatic tire according to any one of [1] to [7], wherein the carcass ply satisfies the following formula (2)':

$$(A/B)\ /\ \text{the cord total fineness} \geq 0.45 \qquad \ldots (2)'.$$

(Advantageous Effect)

According to the present disclosure, it is possible to provide a tire that has improved wet braking performance and high fuel efficiency without reducing the cut resistance.

BRIEF DESCRIPTION OF THE DRAWINGS

In the accompanying drawings:

FIG. 1 is a cross-sectional view of one embodiment of a pneumatic tire of the present disclosure; and
FIG. 2 is a diagram schematically illustrating a cross-section of a carcass ply formed by coating PET fiber cords according to one embodiment of the present disclosure.

DETAILED DESCRIPTION

Hereinafter, the pneumatic tire of the present disclosure is described below in detail with reference to embodiments thereof.

<Definitions>

The compounds disclosed herein may be partially or completely derived from fossil resources, biological resources such as plant resources, or recyclable resources such as end-of-life tires. They may also be derived from mixtures of two or more of fossil resources, biological resources, and recyclable resources.
In the present specification, the glass transition temperature of a styrene-butadiene rubber is determined by recording a DSC curve while it is heated within a certain temperature range in accordance with ISO 22768:2006. The peak top (inflection point) of the DSC differential curve is defined as the glass transition temperature.
In the present specification, the SP values (solubility parameter) of an isoprene skeleton rubber, a styrene-butadiene rubber, and resin components are calculated according to the Fedors method.
In the present specification, the "molecular weight" of a rubber component refers to the standard polystyrene-equivalent molecular weight obtained by GPC (gel permeation chromatography).

In the present specification, the softening point of a resin component is measured in accordance with JIS K2207-1996 (ring and ball method).

In the present specification, the weight-average molecular weight of a resin component is measured by gel permeation chromatography (GPC), and the polystyrene-equivalent value is calculated.

In the present specification, tanδ of the coating rubber refers to the value of tanδ measured under the conditions of a temperature of 24°C, a strain of 1%, and a frequency of 52 Hz using a spectrometer (manufactured by Ueshima Seisakusho Co., Ltd.).

<Pneumatic Tire>

FIG. 1 is a cross-sectional view of one embodiment of a pneumatic tire of the present disclosure. The pneumatic tire 1 illustrated in FIG. 1 includes a pair of bead portions 2, a pair of sidewall portions 3, a tread member 4 extending on the both sidewall portions 3, a carcass 5 that extends in a toroidal shape between the pair of bead portions 2 to reinforce the portions 2, 3, and 4, and a belt 6 disposed outward of the crown portion of the carcass 5 in the tire radial direction. FIG. 2 is a schematic cross-sectional view illustrating a carcass ply according to one embodiment of the present disclosure formed by coating PET fiber cords. The carcass ply 9 illustrated in FIG. 2 is formed by coating PET fiber cords 10 with a coating rubber 20.

The carcass 5 of the pneumatic tire illustrated in FIG. 1 is composed of one carcass ply 9 which is formed by coating multiple cords arranged in parallel with a coating rubber. The carcass 5 has a main body portion extending in a toroidal shape between bead cores 7 embedded in the corresponding bead portions 2 and turn-up portions that are turned up radially outward from the inside to the outside in the tire width direction around the respective bead cores 7. However, in the pneumatic tire of the present disclosure, the number of plies and the structure of the carcass 5 are not limited to these.

Furthermore, the belt 6 of the pneumatic tire illustrated in FIG. 1 is made of two belt layers 6A and 6B. However, in the pneumatic tire of the present disclosure, the number of belt layers constituting the belt 6 is not limited to two, and the number of belt layers may be three or more. Here, the belt layers are generally composed of metal cords (preferably steel cords) coated with rubber that extend inclined with respect to the tire equatorial plane. The two belt layers are laminated such that the metal cords constituting the belt layers intersect each other across the tire equatorial plane, forming the belt 6.

The pneumatic tire 1 of the present embodiment includes a tread rubber layer 8 located on the outermost surface of the tread member 4 and a carcass ply 9 that is formed by coating PET fiber cords with a coating rubber and is located inward of the tread rubber layer 8 in the tire radial direction,

the tread rubber layer 8 includes a rubber component, a resin component, and a filler,
the rubber component includes an isoprene skeleton rubber and a styrene-butadiene rubber,
the glass transition temperature of at least one type of the styrene-butadiene rubber is lower than -40°C,
the resin component has a difference of the SP value relative to the SP value of the isoprene skeleton rubber of 1.40 $(cal/cm^3)^{1/2}$ or less,
the tread rubber layer satisfies the following formula (1):

$$\text{the mass ratio of the resin component / the isoprene skeleton rubber} \geq 0.5 \quad (1),$$

the total gauge of the carcass ply 5 is 1.2 mm or less, and
the carcass ply 5 satisfies the following formula (2):

$$(A/B) \text{ / the cord total fineness} \geq 0.3 \quad \dots (2),$$

where A is defined as: the cord strength (N) × the fiber occupancy rate,
the fiber occupancy rate is defined as: the cross-sectional area of a PET fiber cord ($mm^2$) / (the total gauge of the carcass ply (mm) × (the diameter of a PET fiber cord (mm) + the inter-cord spacing of the PET fiber cords (mm))), and
B is defined as: tanδ of the coating rubber × the rubber occupancy rate,
the rubber occupancy rate is defined as: (1 - the fiber occupancy rate), and
the cord total fineness is the sum (dtex) of finenesses of PET fibers forming a cord.

It should be noted that the pneumatic tire 1 of the present disclosure only needs to include a tread rubber layer 8 located on the outermost surface of the tread member 4 and a carcass ply 9 that is formed by coating PET fiber cords with a coating rubber and is located inward of the tread rubber layer 8 in the tire radial direction, and various modifications can be made. For example, the tread rubber layer 8 of the pneumatic tire 1 illustrated in FIG. 1 can be divided into a cap rubber

located on the outermost surface side and a base rubber located inward thereof in the tire radial direction.

Since the tread rubber layer 8 contains the resin component having a difference of the SP value relative to the SP value of the isoprene skeleton rubber of 1.40 $(cal/cm^3)^{1/2}$ or less, the wet braking performance of the pneumatic tire 1 of the present embodiment is improved.

However, merely including a resin component in the tread rubber layer 8 results in a decrease in the high fuel efficiency of the tire. To address this issue, by including a styrene-butadiene rubber with a glass transition temperature lower than -40°C in the tread rubber layer 8, the dispersibility of the filler is improved, thereby compensating for the decrease in the fuel efficiency of the tire. Furthermore, by including an isoprene skeleton rubber in the tread rubber layer 8, the fracture strength can be increased, which in turn reduces the rolling resistance of the tire and enhances the high fuel efficiency.

Additionally, by setting the mass ratio of the resin component / the isoprene skeleton rubber in the tread rubber layer 8 to be 0.5 or more, the wet braking performance of the tire can be further improved.

Moreover, when a resin component serving as a softening component is included in the tread rubber layer 8, the rigidity of the tread rubber layer 8 is decreased, leading to a reduction in the plunger level of the pneumatic tire 1, which may result in insufficient cut resistance. To address this issue, in the pneumatic tire 1 of the present embodiment, since a carcass ply 9 formed by coating PET fiber cords 10 that have a total gauge of 1.2 mm or less and satisfy the following formula (2) with a coating rubber 20 is used in the carcass 5, the strength of the carcass 5 is improved and the plunger level is increased, compensating for the cut resistance of the pneumatic tire 1:

$$(A/B) \text{ / the cord total fineness} \geq 0.3 \qquad \dots (2),$$

where A is defined as: the cord strength (N) × the fiber occupancy rate,

the fiber occupancy rate is defined as: the cross-sectional area of a PET fiber cord ($mm^2$) / (the total gauge of the carcass ply (mm) × (the diameter of a PET fiber cord (mm) + the inter-cord spacing of the PET fiber cords (mm))), and
B is defined as: tanδ of the coating rubber × the rubber occupancy rate,
the rubber occupancy rate is defined as: (1 - the fiber occupancy rate), and
the cord total fineness is the sum (dtex) of finenesses of PET fibers forming a cord.

Therefore, the tire 1 of the present embodiment has improved wet braking performance and high fuel efficiency without reducing the cut resistance.

<<Tread Rubber Layer>>

In the pneumatic tire of the present embodiment, the tread rubber layer includes a rubber component, a resin component, and a filler. The tread rubber layer can be produced, for example, from a rubber composition containing the rubber component, the resin component, and the filler.

(Rubber Component)

The rubber component includes an isoprene skeleton rubber and a styrene-butadiene rubber and may further include other rubber components.

- Isoprene Skeleton Rubber -

The isoprene skeleton rubber refers to rubber with isoprene units as the main skeleton thereof, examples thereof specifically include natural rubber (NR) and synthetic isoprene rubber (IR).

By including an isoprene skeleton rubber in the rubber component, the fracture strength of the tread rubber layer can be increased. As a result, the rolling resistance of a tire provided with the tread rubber layer can be reduced, and the high fuel efficiency can be improved, and the wear resistance of the tire can also be improved.

The content of the isoprene skeleton rubber in 100 parts by mass of the rubber component is preferably 1 to 80 parts by mass, and more preferably 1 to 40 parts by mass. When the content of the isoprene skeleton rubber in 100 parts by mass of the rubber component is 1 to 80 parts by mass, the fuel efficiency and wet braking performance of the tire can be further improved. Additionally, when the content of the isoprene skeleton rubber in 100 parts by mass of the rubber component is 1 to 40 parts by mass, the fuel efficiency and wet braking performance of the tire can be further improved. From the perspective of further enhancing the effects achieved by blending the isoprene skeleton rubber, the content of the isoprene skeleton rubber in 100 parts by mass of the rubber component is more preferably 10 parts by mass or more.

- Styrene-Butadiene Rubber -

The rubber component in the tread rubber layer includes styrene-butadiene rubber (SBR), and the glass transition temperature of at least one type of the styrene-butadiene rubber (SBR) is lower than -40°C, preferably -45°C or lower, more preferably -50°C or lower, and preferably higher than - 90°C. When at least one type of styrene-butadiene rubber has a glass transition temperature lower than -40°C, the fuel efficiency and wear resistance of the tire can be sufficiently improved. Furthermore, a styrene-butadiene rubber with a glass transition temperature higher than -90°C is easier to synthesize.

The rubber component of the tread rubber layer may also include a styrene-butadiene rubber with a glass transition temperature of -40°C or higher.

The content of the styrene-butadiene rubber in 100 parts by mass of the rubber component is preferably 20 to 99 parts by mass, more preferably 30 to 99 parts by mass, more preferably 40 to 99 parts by mass, more preferably 50 to 99 parts by mass, and even more preferably 60 to 99 parts by mass. When the content of the styrene-butadiene rubber in 100 parts by mass of the rubber component is 60 to 99 parts by mass, the fuel efficiency and wet braking performance of the tire can be further improved.

The difference in SP values between the isoprene skeleton rubber and the styrene-butadiene rubber is preferably 0.3 $(cal/cm^3)^{1/2}$ or more, and more preferably 0.35 $(cal/cm^3)^{1/2}$ or more. When the difference in SP values between the isoprene skeleton rubber and the styrene-butadiene rubber is 0.3 $(cal/cm^3)^{1/2}$ or more, the isoprene skeleton rubber and the styrene-butadiene rubber tend to become incompatible.

The styrene-butadiene rubber preferably has a bound styrene content of less than 15 mass%. The bound styrene content of the styrene-butadiene rubber refers to the proportion of styrene units contained in the styrene-butadiene rubber. When the bound styrene content of the styrene-butadiene rubber is less than 15 mass%, the glass transition temperature tends to be lower. The bound styrene content of the styrene-butadiene rubber is more preferably 14 mass% or less, more preferably 13 mass% or less, and even more preferably 12 mass% or less. Moreover, from the perspective of the wear resistance of the tire, the bound styrene content of the styrene-butadiene rubber is preferably 5 mass% or more, more preferably 7 mass% or more, and even more preferably 8 mass% or more.

The bound styrene content of the styrene-butadiene rubber can be adjusted by the amount of monomer used in the polymerization of the styrene-butadiene rubber, the degree of polymerization, and other factors.

The styrene-butadiene rubber is preferably modified with a modifier having a functional group containing a nitrogen atom and an alkoxy group. When the styrene-butadiene rubber is modified with a modifier having a functional group containing a nitrogen atom and an alkoxy group, the balance between the wet braking performance, fuel efficiency, and wear resistance of the tire is further improved, and in particular, the fuel efficiency and wear resistance can be further enhanced.

The modifier having a functional group containing a nitrogen atom and an alkoxy group is a generic term for modifiers having at least one functional group containing a nitrogen atom and at least one alkoxy group.

The functional group containing a nitrogen atom is preferably selected from the following:
monovalent hydrocarbon groups containing 1 to 30 carbon atoms having a functional group selected from the group consisting of a primary amino group, a primary amino group protected with a hydrolyzable protective group, an onium salt residue of a primary amine, an isocyanate group, a thioisocyanate group, an imine group, an imine residue, an amide group, a secondary amino group protected with a hydrolyzable protective group, a cyclic secondary amino group, an onium salt residue of a cyclic secondary amine, a non-cyclic secondary amino group, an onium salt residue of a non-cyclic secondary amine, an isocyanuric acid triester residue, a cyclic tertiary amino group, a non-cyclic tertiary amino group, a nitrile group, a pyridine residue, an onium salt residue of a cyclic tertiary amine, and an onium salt residue of a non-cyclic tertiary amine, and being a straight chain, a branched chain, or including an alicyclic ring or an aromatic ring; or monovalent hydrocarbon groups containing 1 to 30 carbon atoms being a straight chain, a branched chain, or including an alicyclic ring or an aromatic ring that may include at least one heteroatom selected from an oxygen atom, sulfur atom, and phosphorus atom.

-- Modified Styrene-Butadiene Rubber of First Preferred Embodiment --

The styrene-butadiene rubber (SBR) is preferably modified with an aminoalkoxysilane compound, and from the perspective of having high affinity with the filler, the styrene-butadiene rubber is more preferably modified at a terminal end with an aminoalkoxysilane compound. When the styrene-butadiene rubber is modified with an aminoalkoxysilane compound at a terminal end, the interaction between the modified styrene-butadiene rubber and the filler (particularly silica) becomes particularly strong.

The modification site of the styrene-butadiene rubber may be a molecular terminal as described above, or may be the main chain.

A styrene-butadiene rubber with modified molecular terminals can be produced, for example, by reacting various

modifying agents with a terminal of a styrene-butadiene copolymer having an active terminal, according to the method disclosed in WO 2003/046020 A1 and JP 2007-217562 A.

In one preferred embodiment, the styrene-butadiene rubber with a modified molecular terminal can be produced by first reacting an aminoalkoxysilane compound with a terminal of a styrene-butadiene copolymer having an active terminal with a cis-1,4 bond content of 75% or more, according to the method disclosed in WO 2003/046020 A1 or JP 2007-217562 A, and then stabilizing the resulting compound by reacting it with a carboxylic acid partial ester of a polyhydric alcohol.

The carboxylic acid partial ester of a polyhydric alcohol refers to an ester of a polyhydric alcohol and a carboxylic acid, which has at least one hydroxyl group. Specifically, esters of saccharides or modified saccharides having four or more carbon atoms and fatty acids are preferably used. More preferably, these esters include: (1) fatty acid partial esters of polyhydric alcohols, particularly partial esters (monoesters, diesters, or triesters) of saturated or unsaturated higher fatty acids having 10 to 20 carbon atoms and polyhydric alcohols, and (2) ester compounds in which one to three partial esters of polycarboxylic acids and higher alcohols are bonded to a polyhydric alcohol.

As the polyhydric alcohols used as raw materials for partial esters, (hydrogenated or non-hydrogenated) saccharides with five or six carbon atoms having at least three hydroxyl groups, glycols, and polyhydroxy compounds are preferably used. As the raw material fatty acids, saturated or unsaturated fatty acids having 10 to 20 carbon atoms are preferred, and stearic acid, lauric acid, or palmitic acid is used, for example.

Among the fatty acid partial esters of polyhydric alcohols, sorbitan fatty acid esters are preferred, and specific examples thereof include sorbitan monolaurate, sorbitan monopalmitate, sorbitan monostearate, sorbitan tristearate, sorbitan monooleate, and sorbitan trioleate.

The aminoalkoxysilane compound mentioned above is not particularly limited, but an aminoalkoxysilane compound represented by the following general formula (i) is preferred.

$$R^{11}_{a}\text{-Si-}(OR^{12})_{4-a} \cdots \quad (i)$$

In the general formula (I), $R^{11}$ and $R^{12}$ each independently represent a monovalent aliphatic hydrocarbon group having 1 to 20 carbon atoms or a monovalent aromatic hydrocarbon group having 6 to 18 carbon atoms, at least one of $R^{11}$ and $R^{12}$ is substituted with an amino group, and "a" represents an integer from 0 to 2; when multiple $OR^{12}$ are present, each $OR^{12}$ may be the same or different; and the molecule does not include active protons.

As the aminoalkoxysilane compound, an aminoalkoxysilane compound represented by the following general formula (ii) is also preferred.

[Chem. 1]

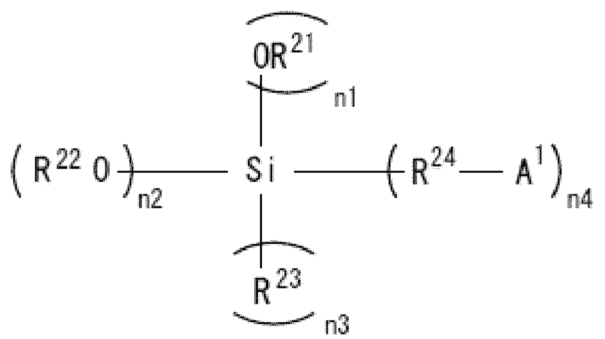

· · · · ( ii )

In the general formula (ii), n1 + n2 + n3 + n4 = 4, where n2 is an integer from 1 to 4, and n1, n3, and n4 are integers from 0 to 3.

$A^1$ is at least one functional group selected from the group consisting of a saturated cyclic tertiary amine compound residue, an unsaturated cyclic tertiary amine compound residue, a ketimine residue, a nitrile group, a (thio) isocyanate group, an isocyanuric acid trihydrocarbyl ester group, a pyridine group, a (thio)ketone group, an amide group, and a primary or secondary amino group having a hydrolyzable group. When n4 is 2 or more, $A^1$ may be the same or different, and $A^1$ may be a divalent group that forms a cyclic structure by binding to Si.

$R^{21}$ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

$R^{22}$ is a monovalent aliphatic or alicyclic hydrocarbon group having 1 to 20 carbon atoms or a monovalent aromatic hydrocarbon group having 6 to 18 carbon atoms, any of which may contain a nitrogen atom and/or a silicon atom. When n2 is 2 or more, $R^{22}$ may be the same or different from each other, or they may be joined together to form a ring.

$R^{23}$ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, $R^{23}$ may be the same or different.

$R^{24}$ is a divalent aliphatic or alicyclic hydrocarbon group having 1 to 20 carbon atoms or a divalent aromatic hydrocarbon group having 6 to 18 carbon atoms, and when n4 is 2 or more, $R^{24}$ may be the same or different.

The hydrolyzable group in the primary or secondary amino group having the hydrolyzable group is preferably a trimethylsilyl group or a tert-butyldimethylsilyl group, with the trimethylsilyl group being particularly preferred.

The aminoalkoxysilane compound represented by the above general formula (ii) is preferably an aminoalkoxysilane compound represented by the following general formula (iii).

[Chem. 2]

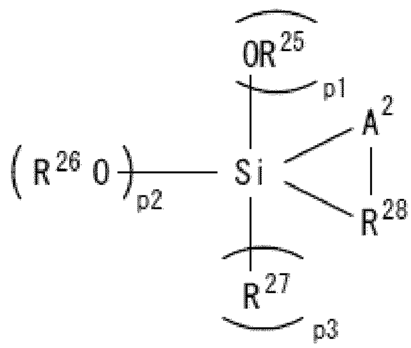

· · · · (iii)

In the general formula (iii), p1 + p2 + p3 = 2, where p2 is an integer from 1 to 2, and p1 and p3 are integers from 0 to 1.

$A^2$ is NRa, where Ra is a monovalent hydrocarbon group, a hydrolyzable group, or a nitrogen-containing organic group.

$R^{25}$ is a monovalent aliphatic or alicyclic hydrocarbon group having 1 to 20 carbon atoms or a monovalent aromatic hydrocarbon group having 6 to 18 carbon atoms.

$R^{26}$ is a monovalent aliphatic or alicyclic hydrocarbon group having 1 to 20 carbon atoms, a monovalent aromatic hydrocarbon group having 6 to 18 carbon atoms, or a nitrogen-containing organic group, any of which may contain a nitrogen atom and/or a silicon atom. When p2 is 2, $R^{26}$ may be the same or different from each other, or they may be joined together to form a ring.

$R^{27}$ is a monovalent aliphatic or alicyclic hydrocarbon group having 1 to 20 carbon atoms, a monovalent aromatic hydrocarbon group having 6 to 18 carbon atoms, or a halogen atom.

$R^{28}$ is a divalent aliphatic or alicyclic hydrocarbon group having 1 to 20 carbon atoms or a divalent aromatic hydrocarbon group having 6 to 18 carbon atoms.

A trimethylsilyl group or tert-butyldimethylsilyl group is preferable as the hydrolyzable group, and a trimethylsilyl group is particularly preferable.

The aminoalkoxysilane compound represented by the above general formula (ii) is also preferably an aminoalkoxysilane compound represented by the following general formula (iv) or the following general formula (v).

[Chem. 3]

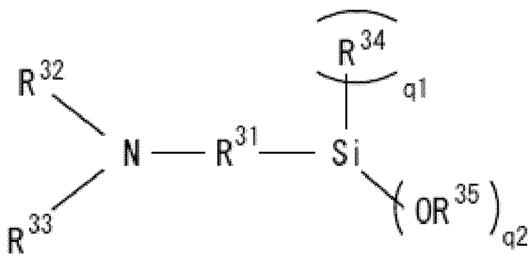

· · · · (iv)

In the general formula (iv), q1 + q2 = 3, where q1 is an integer from 0 to 2, and q2 is an integer from 1 to 3.

$R^{31}$ is a divalent aliphatic or alicyclic hydrocarbon group having 1 to 20 carbon atoms or a divalent aromatic

hydrocarbon group having 6 to 18 carbon atoms.

$R^{32}$ and $R^{33}$ are each independently a hydrolyzable group, a monovalent aliphatic or alicyclic hydrocarbon group having 1 to 20 carbon atoms, or a monovalent aromatic hydrocarbon group having 6 to 18 carbon atoms.

$R^{34}$ is a monovalent aliphatic or alicyclic hydrocarbon group having 1 to 20 carbon atoms or a monovalent aromatic hydrocarbon group having 6 to 18 carbon atoms, and when q1 is 2, $R^{34}$ may be the same or different.

$R^{35}$ is a monovalent aliphatic or alicyclic hydrocarbon group having 1 to 20 carbon atoms or a monovalent aromatic hydrocarbon group having 6 to 18 carbon atoms, and when q2 is 2 or more, $R^{35}$ may be the same or different.

[Chem. 4]

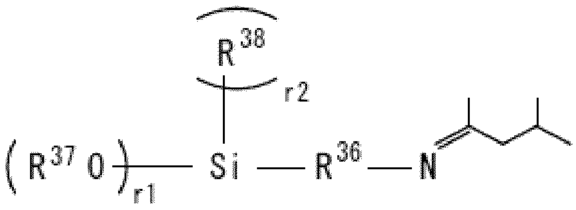

· · · · (v)

In the general formula (v), r1 + r2 = 3, where r1 is an integer from 1 to 3, and r2 is an integer from 0 to 2.

$R^{36}$ is a divalent aliphatic or alicyclic hydrocarbon group having 1 to 20 carbon atoms or a divalent aromatic hydrocarbon group having 6 to 18 carbon atoms.

$R^{37}$ is a dimethylaminomethyl group, a dimethylaminoethyl group, a diethylaminomethyl group, a diethylaminoethyl group, a methylsilyl (methyl) aminomethyl group, a methylsilyl (methyl) aminoethyl group, a methylsilyl (ethyl) aminomethyl group, a methylsilyl (ethyl) aminoethyl group, a dimethylsilyl aminomethyl group, a dimethylsilyl aminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, $R^{17}$ may be the same or different.

$R^{38}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, $R^{38}$ may be the same or different.

A specific example of the aminoalkoxysilane compound represented by general formula (v) includes N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

[Chem. 5]

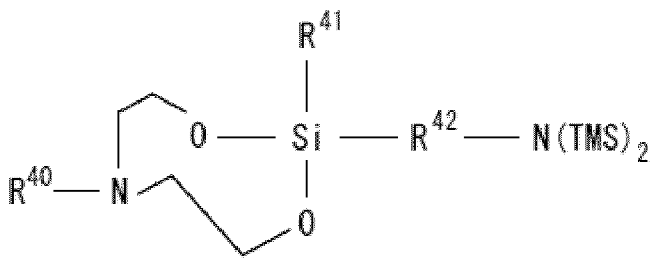

· · · · (vi)

In the general formula (vi), $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms.

$R^{41}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

$R^{42}$ is a divalent aliphatic or alicyclic hydrocarbon group having 1 to 20 carbon atoms or a divalent aromatic hydrocarbon group having 6 to 18 carbon atoms.

Here, TMS indicates a trimethylsilyl group (the same holds below).

[Chem. 6]

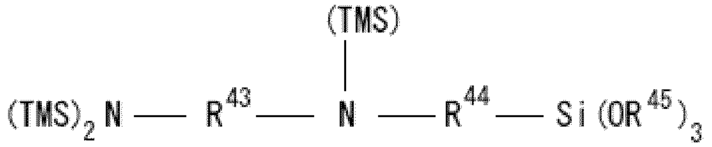

・・・・(vii)

In the general formula (vii), $R^{43}$ and $R^{44}$ are each independently a divalent aliphatic or alicyclic hydrocarbon group having 1 to 20 carbon atoms or a divalent aromatic hydrocarbon group having 6 to 18 carbon atoms.

$R^{45}$ is a monovalent aliphatic or alicyclic hydrocarbon group having 1 to 20 carbon atoms or a monovalent aromatic hydrocarbon group having 6 to 18 carbon atoms, and each $R^{45}$ may be the same or different.

The aminoalkoxysilane compound represented by the above general formula (ii) is also preferably an aminoalkoxysilane compound represented by the following general formula (viii) or the following general formula (ix).

[Chem. 7]

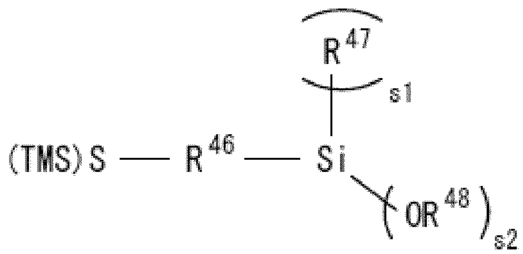

・・・・(viii)

In the general formula (viii), s1 + s2 = 3, where s1 is an integer from 0 to 2, and s2 is an integer from 1 to 3.

$R^{46}$ is a divalent aliphatic or alicyclic hydrocarbon group having 1 to 20 carbon atoms or a divalent aromatic hydrocarbon group having 6 to 18 carbon atoms.

$R^{47}$ and $R^{48}$ are each independently a monovalent aliphatic or alicyclic hydrocarbon group having 1 to 20 carbon atoms or a monovalent aromatic hydrocarbon group having 6 to 18 carbon atoms. If multiple $R^{47}$ or $R^{48}$ are each present, they may be the same or different.

[Chem. 8]

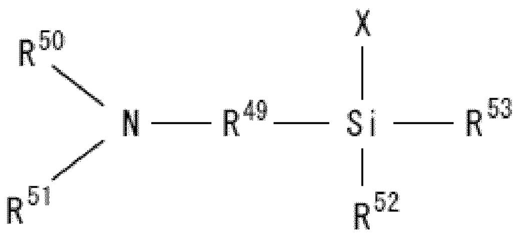

・・・・(ix)

In the general formula (ix), X is a halogen atom.

$R^{49}$ is a divalent aliphatic or alicyclic hydrocarbon group having 1 to 20 carbon atoms or a divalent aromatic hydrocarbon group having 6 to 18 carbon atoms.

$R^{50}$ and $R^{51}$ are each independently a hydrolyzable group, a monovalent aliphatic or alicyclic hydrocarbon group having 1 to 20 carbon atoms, or a monovalent aromatic hydrocarbon group having 6 to 18 carbon atoms, or $R^{50}$ and $R^{51}$ are bonded together to form a divalent organic group.

$R^{52}$ and $R^{53}$ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

A hydrolyzable group is preferable as $R^{50}$ and $R^{51}$, and a trimethylsilyl group or tert-butyldimethylsilyl group is preferable as the hydrolyzable group, with a trimethylsilyl group being particularly preferable.

The aminoalkoxysilane compound represented by the above general formula (ii) is also preferably an aminoalkoxysilane compound represented by the following general formula (x), the following general formula (xi), the following general formula (xii), or the following general formula (xiii).

[Chem. 9]

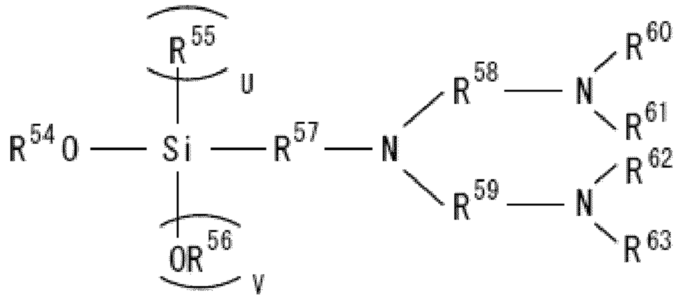

· · · · (x)

[Chem. 10]

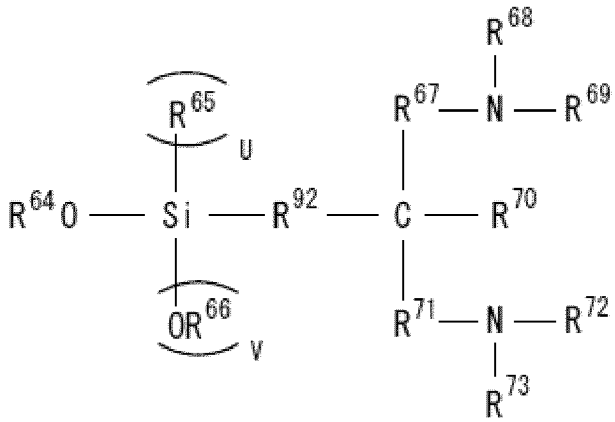

· · · · (xi)

[Chem. 11]

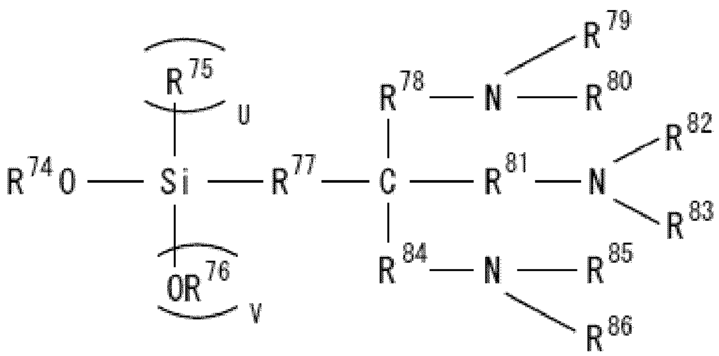

· · · · (xii)

[Chem. 12]

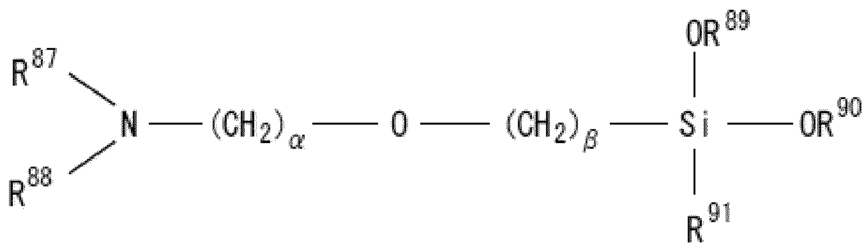

· · · · (xiii)

In the general formulas (x) to (xiii), the symbols U and V each represent integers from 0 to 2 and satisfy the

relationship U + V = 2.

$R^{54-92}$ in the general formulas (x) to (xiii) may be the same or different, and each represents a monovalent or divalent aliphatic or alicyclic hydrocarbon group having 1 to 20 carbon atoms or a monovalent or divalent aromatic hydrocarbon group having 6 to 18 carbon atoms.

In the general formula (xiii), $\alpha$ and $\beta$ represent integers from 0 to 5.

Among the compounds satisfying general formula (x), general formula (xi), and general formula (xii), N1,N1,N7,N7-tetramethyl-4-((trimethoxysilyl)methyl)heptane-1,7-diamine, 2-((hexyl-dimethoxysilyl) methyl)-N1,N1,N3,N3-2-pentamethylpropane-1,3-diamine, N1-(3-(dimethylamino)propyl)-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are particularly preferred.

Furthermore, among the compounds satisfying general formula (xiii), N,N-dimethyl-2-(3-(dimethoxymethylsilyl) propoxy)ethanamine, N,N-bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are particularly preferred.

-- Modified Styrene-Butadiene Rubber of Second Preferred Embodiment --

The styrene-butadiene rubber (SBR) is also preferably modified with a coupling agent represented by the following general formula (I). In this case, the fuel efficiency and wear resistance of the tire can be further improved.

[Chem. 13]

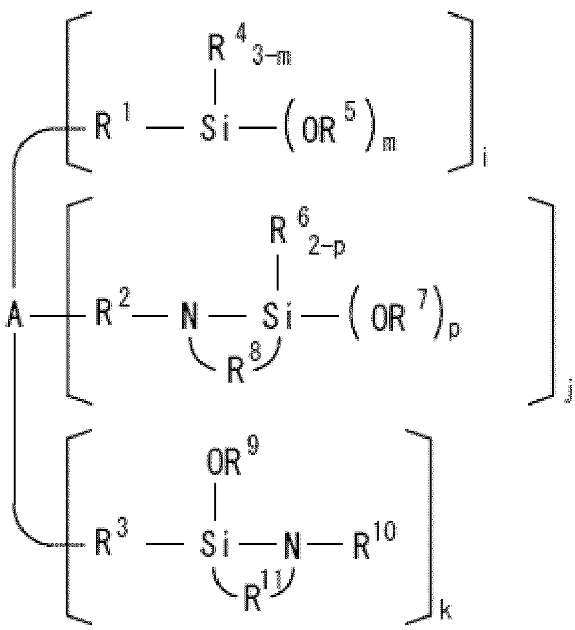

· · · · (I)

In the above general formula (I), $R^1$, $R^2$, and $R^3$ each independently represent a single bond or an alkylene group having 1 to 20 carbon atoms.

$R^4$, $R^5$, $R^6$, $R^7$, and $R^9$ each independently represent an alkyl group having 1 to 20 carbon atoms.

$R^8$ and $R^{11}$ each independently represent an alkylene group having 1 to 20 carbon atoms.

$R^{10}$ represents an alkyl group or a trialkylsilyl group having 1 to 20 carbon atoms.

m represents an integer from 1 to 3, and p represents 1 or 2.

When multiple $R^1$ to $R^{11}$, m, and p are each present, they are each independently selected.

i, j, and k each independently represent an integer from 0 to 6, provided that (i + j + k) is an integer from 3 to 10.

A represents a hydrocarbon group having 1 to 20 carbon atoms or an organic group having 1 to 20 carbon atoms that includes at least one atom selected from the group consisting of an oxygen atom, a nitrogen atom, a silicon atom, a sulfur atom, and a phosphorus atom and does not contain active hydrogen.

In the general formula (I), the hydrocarbon group represented by A includes saturated, unsaturated, aliphatic, and aromatic hydrocarbon groups. Examples of organic groups that do not contain active hydrogen include organic groups that do not have functional groups with active hydrogen, such as hydroxyl groups (-OH), secondary amino groups (>NH),

primary amino groups ($-NH_2$), and sulfhydryl groups (-SH), for example.

The styrene-butadiene rubber modified with a coupling agent represented by the above general formula (I) preferably has a weight-average molecular weight (Mw) of $20 \times 10^4$ to $300 \times 10^4$, contains 0.25 to 30 mass% of modified styrene-butadiene rubber with a molecular weight of $200 \times 10^4$ to $500 \times 10^4$ relative to the total amount of modified styrene-butadiene rubber, and has a contraction factor (g') of less than 0.64.

In general, polymers with branching tend to have a smaller molecular size compared to linear polymers of the same absolute molecular weight, and the contraction factor (g') serves as an index indicating the ratio of the molecular size relative to an assumed linear polymer with the same absolute molecular weight. That is, as the degree of branching of the polymer increases, the contraction factor (g') tends to decrease. In the present embodiment, the intrinsic viscosity is used as an index of molecular size, assuming that linear polymers follow the relationship: the intrinsic viscosity $[\eta] = -3.883 M^{0.771}$. The contraction factor (g') of a modified styrene-butadiene rubber with each absolute molecular weight is calculated, and the average value of the contraction factors (g') when the absolute molecular weights are $100 \times 10^4$ to $200 \times 10^4$ is defined as the contraction factor (g') of that modified styrene-butadiene rubber. Here, "branching" refers to a structure formed when one polymer is directly or indirectly bonded to another polymer. Additionally, "degree of branching" refers to the number of polymers that are directly or indirectly bonded to a single branch. For example, if five styrene-butadiene copolymer chains described later are indirectly bonded to each other via a coupling residue described later, the degree of branching is 5. The coupling residue refers to a structural unit of the modified styrene-butadiene rubber that is bonded to the styrene-butadiene copolymer chains, and it is a structural unit derived from the coupling agent, which is formed by reacting the styrene-butadiene copolymer and the coupling agent described later, for example. Additionally, the styrene-butadiene copolymer chain is a structural unit of the modified styrene-butadiene rubber, which is formed as a structural unit derived from the styrene-butadiene copolymer by reacting the styrene-butadiene copolymer and the coupling agent described later, for example.

The contraction factor (g') is preferably less than 0.64, more preferably 0.63 or less, even more preferably 0.60 or less, further preferably 0.59 or less, and even further preferably 0.57 or less. The lower limit of the contraction factor (g') is not particularly limited and may be smaller than or equal to the detection limit, but it is preferably 0.30 or more, more preferably 0.33 or more, further preferably 0.35 or more, and even further preferably 0.45 or more. When a modified styrene-butadiene rubber with a contraction factor (g') within this range is used, the processability of the rubber composition used in the tread rubber layer is improved.

Since the contraction factor (g') tends to depend on the degree of branching, the contraction factor (g') can be controlled using the degree of branching as an index, for example. Specifically, when a modified styrene-butadiene rubber with a branching degree of 6 is used, the contraction factor (g') tends to be 0.59 or more and 0.63 or less, and when a modified styrene-butadiene rubber with a branching degree of 8 is used, the contraction factor (g') tends to be 0.45 or more and 0.59 or less.

It is preferable that the styrene-butadiene rubber modified with a coupling agent represented by the above general formula (I) has branching and has a branching degree of 5 or more. Additionally, it is more preferable that the modified styrene-butadiene rubber has one or more coupling residues and a styrene-butadiene copolymer chain bonded to the coupling residues, and the branching includes a structure in which five or more styrene-butadiene copolymer chains are bonded to a single coupling residue. By specifying the structure of the modified styrene-butadiene rubber such that the branching degree is 5 or more and the branching includes a structure in which five or more styrene-butadiene copolymer chains are bonded to a single coupling residue, the contraction factor (g') can be more reliably controlled to be less than 0.64. The number of styrene-butadiene copolymer chains bonded to a single coupling residue can be confirmed from the value of the contraction factor (g').

It is more preferable that the modified styrene-butadiene rubber preferably has branching and has a branching degree of 6 or more. Additionally, it is even more preferable that the modified styrene-butadiene rubber has one or more coupling residues and a styrene-butadiene copolymer chain bonded to the coupling residues, and the branching includes a structure in which six or more styrene-butadiene copolymer chains are bonded to a single coupling residue. By specifying the structure of the modified styrene-butadiene rubber such that the branching degree is 6 or more and the branching includes a structure in which six or more styrene-butadiene copolymer chains are bonded to a single coupling residue, the contraction factor (g') can be controlled to be 0.63 or less.

Furthermore, the modified styrene-butadiene rubber further preferably has branching and has a branching degree of 7 or more, and even further preferably has a branching degree of 8 or more. The upper limit of the branching degree is not particularly limited but is preferably 18 or less. Additionally, it is further preferable that the modified styrene-butadiene rubber has one or more coupling residues and a styrene-butadiene copolymer chain bonded to the coupling residues and the branching includes a structure in which seven or more styrene-butadiene copolymer chains are bonded to a single coupling residue, and it is particularly preferable that the branching includes a structure in which eight or more styrene-butadiene copolymer chains are bonded to a single coupling residue. By setting the branching degree to 8 or more and specifying the structure of the modified styrene-butadiene rubber such that the branching includes a structure in which eight or more styrene-butadiene copolymer chains are bonded to a single coupling residue, the contraction factor (g') can

be controlled to be 0.59 or less.

The styrene-butadiene copolymer chain preferably has at least one of the terminal ends thereof bonded to a silicon atom contained in the coupling residue. In this case, terminal ends of multiple styrene-butadiene copolymer chains may be bonded to a single silicon atom. Additionally, a terminal end of a styrene-butadiene copolymer chain and an alkoxy group having 1 to 20 carbon atoms or a hydroxyl group may be bonded to a single silicon atom, and as a result, the single silicon atom may form an alkoxysilyl group having 1 to 20 carbon atoms or a silanol group.

The modified styrene-butadiene rubber may be an oil-extended rubber to which extending oil has been added. The modified styrene-butadiene rubber may be either non-oil-extended or oil-extended, but from the perspective of wear resistance, the Mooney viscosity measured at 100°C is preferably 20 or more and 100 or less, more preferably 30 or more and 80 or less.

The weight-average molecular weight (Mw) of the modified styrene-butadiene rubber is preferably $20 \times 10^4$ or more and $300 \times 10^4$ or less, more preferably $50 \times 10^4$ or more, more preferably $64 \times 10^4$ or more, and even more preferably $80 \times 10^4$ or more. Additionally, the weight-average molecular weight is preferably $250 \times 10^4$ or less, more preferably $180 \times 10^4$ or less, and even more preferably $150 \times 10^4$ or less. When the weight-average molecular weight is $20 \times 10^4$ or more, the low loss property and wear resistance of the tread rubber layer can be sufficiently improved. Furthermore, when the weight-average molecular weight is $300 \times 10^4$ or less, the processability of the rubber composition used in the tread rubber layer is improved.

The modified styrene-butadiene rubber preferably contains a modified styrene-butadiene rubber having a molecular weight of $200 \times 10^4$ or more and $500 \times 10^4$ or less (hereinafter, referred to as "specific high molecular weight component"), in an amount of 0.25 mass% or more and 30 mass% or less relative to the total amount (100 mass%) of the modified styrene-butadiene rubber. When the content of the specific high molecular weight component is 0.25 mass% or more and 30 mass% or less, it is possible to sufficiently improve both the low-loss property and wear resistance of the tread rubber layer. The modified styrene-butadiene rubber contains the above-described specific high molecular weight component in an amount of preferably 1.0 mass% or more, more preferably 1.4 mass% or more, even more preferably 1.75 mass% or more, still even more preferably 2.0 mass% or more, particularly preferably 2.15 mass% or more, and especially preferably 2.5 mass% or more. Additionally, the modified styrene-butadiene rubber contains the specific high molecular weight component in an amount of preferably 28 mass% or less, more preferably 25 mass% or less, even more preferably 20 mass% or less, and still even more preferably 18 mass% or less.

In this specification, the "molecular weight" of the rubber component refers to the polystyrene-equivalent molecular weight obtained by gel permeation chromatography (GPC). To obtain a modified styrene-butadiene rubber in which the content of the specific high molecular weight component is within this range, it is preferable to control the reaction conditions in both the polymerization step and the reaction step described later. For example, in the polymerization step, the amount of the organolithium compound used as a polymerization initiator, which will be described later, may be adjusted. Additionally, in the polymerization step, a method with a residence time distribution may be used in either a continuous or batch polymerization mode. In other words, the time distribution of the growth reaction may be broadened.

In the modified styrene-butadiene rubber, the molecular weight distribution (Mw/Mn), which is expressed as the ratio of weight-average molecular weight (Mw) to number-average molecular weight (Mn), is preferably 1.6 or more and 3.0 or less. When the molecular weight distribution of the modified styrene-butadiene rubber is within this range, the processability of the rubber composition used for the tread rubber layer is improved.

The production method of the modified styrene-butadiene rubber is not particularly limited, but the production method preferably includes a polymerization step, in which butadiene and styrene are copolymerized using an organolithium compound as a polymerization initiator to obtain a styrene-butadiene copolymer, and a reaction step, in which a reactive compound having five or more functional groups (hereinafter referred to as "coupling agent") is reacted with an active terminal of the styrene-butadiene copolymer.

The polymerization step is preferably conducted by living anionic polymerization, which enables the production of a styrene-butadiene copolymer with an active terminal, thereby allowing for the synthesis of a modified styrene-butadiene rubber with a high modification rate.

The styrene-butadiene copolymer is obtained by copolymerizing 1,3-butadiene and styrene.

The amount of the organolithium compound used as a polymerization initiator is preferably determined based on the target molecular weight of the styrene-butadiene copolymer or modified styrene-butadiene rubber. The amount of monomers such as 1,3-butadiene and styrene used relative to the amount of the polymerization initiator is related to the degree of polymerization, that is, it affects the number-average molecular weight (Mn) and/or weight-average molecular weight (Mw). Therefore, to increase the molecular weight, the amount of the polymerization initiator may be reduced, and to decrease the molecular weight, the amount of polymerization initiator may be increased.

From the perspective of industrial availability and ease of control on the polymerization reaction, the organolithium compound is preferably an alkyllithium compound. In this case, a styrene-butadiene copolymer having an alkyl group at the polymerization initiation terminal is obtained. Examples of the alkyllithium compound include n-butyllithium, sec-butyllithium, tert-butyllithium, n-hexyllithium, benzyllithium, phenyllithium, and stilbenyllithium, for example. From the

perspective of industrial availability and ease of control on the polymerization reaction, n-butyllithium and sec-butyllithium are preferred as the alkyllithium compound. These alkyllithium compounds may be used alone or in combination with one or more thereof.

In the polymerization step, examples of the polymerization reaction mode include batch polymerization and continuous polymerization, for example. In the continuous polymerization, one reactor or two or more reactors connected to each other can be used. Examples of continuous reactors include tank reactors and tubular reactors equipped with a stirrer, for example. In the continuous polymerization, it is preferable that monomers, an inert solvent, and a polymerization initiator are continuously fed into the reactor, and a polymer solution containing the polymer is obtained in the reactor, from which the polymer solution is continuously discharged. In the batch polymerization, a tank reactor equipped with a stirrer is used, for example. In the batch polymerization, it is preferable that monomers, an inert solvent, and a polymerization initiator are fed, and, if necessary, monomers are continuously or intermittently added during polymerization, a polymer solution containing the polymer is obtained in the reactor, and the polymer solution is discharged after polymerization is completed. To obtain a styrene-butadiene copolymer with a high proportion of active terminals in the present embodiment, the continuous polymerization process is preferred because it allows the polymer to be continuously discharged and used for the next reaction in a short time.

The polymerization step is preferably conducted in an inert solvent. Examples of the solvent include hydrocarbon-based solvents such as saturated hydrocarbons and aromatic hydrocarbons. Specific examples of hydrocarbon-based solvents include, but are not limited to, aliphatic hydrocarbons such as butane, pentane, hexane, and heptane; alicyclic hydrocarbons such as cyclopentane, cyclohexane, methylcyclopentane, and methylcyclohexane; and aromatic hydrocarbons such as benzene, toluene, and xylene, as well as mixtures thereof. Before being subjected to the polymerization reaction, treating impurities such as allenes and acetylenes with an organometallic compound is preferable because a styrene-butadiene copolymer with a high concentration of active terminals tends to be obtained, which in turn tends to yield a modified styrene-butadiene rubber with a high modification rate.

**In** the polymerization step, a polar compound may be added. By adding a polar compound, styrene can be randomly copolymerized with 1,3-butadiene, and the polar compound also tends to function as a vinylating agent to control the microstructure of the 1,3-butadiene segments.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butoxide, sodium tert-butoxide, and sodium amylate; and phosphine compounds such as triphenylphosphine, for example. These polar compounds may be used alone or in combination with one or more thereof.

**In** the polymerization step, the polymerization temperature is preferably 0°C or higher, more preferably 120°C or lower, and particularly preferably 50°C or higher and 100°C or lower, from the perspective of productivity. Using the polymerization temperature within this range tends to ensure a sufficient reaction amount of the coupling agent with the active terminals after polymerization.

The bound butadiene content in the styrene-butadiene copolymer or modified styrene-butadiene rubber is not particularly limited but is preferably 40 mass% or more and 100 mass% or less, more preferably 55 mass% or more and 80 mass% or less.

Additionally, the bound styrene content in the styrene-butadiene copolymer or modified styrene-butadiene rubber is not particularly limited but is preferably more than 0 mass% and 60 mass% or less, more preferably 20 mass% or more and 45 mass% or less.

When the bound butadiene content and bound styrene content are within these ranges, the low loss property and wear resistance of the tread rubber layer can be further improved.

The bound styrene content can be measured by UV absorption of the phenyl group, and the bound butadiene content can be determined from the measurement result.

In the styrene-butadiene copolymer or modified styrene-butadiene rubber, the vinyl bond content in the butadiene binding units is not particularly limited but is preferably 10 mol% or more and 75 mol% or less, more preferably 20 mol% or more and 65 mol% or less. When the vinyl bond content is within this range, the low loss property and wear resistance of the tread rubber layer can be further improved.

In the case of the modified styrene-butadiene rubber, the vinyl bond content (1,2-bond content) in the butadiene binding units can be determined by the Hampton's method (R. R. Hampton, Analytical Chemistry, 21, 923 (1949)).

The alkoxysilyl group in the coupling agent represented by the above general formula (I) reacts with the active terminal of the styrene-butadiene copolymer, for example, causing the alkoxylithium to dissociate, and a bond between the terminal of the styrene-butadiene copolymer chain and the silicon of the coupling residue tends to be formed. The number of alkoxysilyl groups in the coupling residue is obtained by subtracting the number of SiOR groups reduced by the reaction, from the total number of SiOR groups in one molecule of the coupling agent. Additionally, the azasilacycle group in the coupling agent forms both an >N-Li bond and a bond between the terminal of the styrene-butadiene copolymer and the

silicon in the coupling residue. The >N-Li bond tends to be easily converted into >NH and LiOH due to water or other substances during finishing. Moreover, the unreacted alkoxysilyl groups remaining in the coupling agent tend to be easily converted into silanol (Si-OH group) due to water or other substances during finishing.

The reaction temperature in the reaction step is preferably similar to the polymerization temperature of the styrene-butadiene copolymer, more preferably 0°C or higher and 120°C or lower, and even more preferably 50°C or higher and 100°C or lower. The temperature change from the end of the polymerization step to the addition of the coupling agent is preferably 10°C or less, more preferably 5°C or less.

The reaction time in the reaction step is preferably 10 seconds or more, more preferably 30 seconds or more. The time from the completion of the polymerization step to the start of the reaction step is preferably as short as possible in view of coupling efficiency, and more preferably within 5 minutes.

The mixing in the reaction step may be performed by mechanical stirring or using a static mixer. When the polymerization step is continuous, the reaction step is also preferably continuous. Examples of reactors used in the reaction step include tank reactors and tubular reactors equipped with a stirrer, for example. The coupling agent may be diluted with an inert solvent and continuously fed to the reactor. When the polymerization step is batch, the coupling agent can be added directly to the polymerization reactor, or the polymer can be transferred to a separate reactor for the reaction step.

In the general formula (I), A is preferably represented by any one of the following general formulas (II) to (V). When A is represented by any one of general formulas (II) to (V), a modified styrene-butadiene rubber with more excellent performance can be obtained.

[Chem. 14]

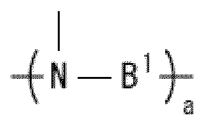 ・・・・ (II)

In the general formula (II), $B^1$ represents a single bond or a hydrocarbon group having 1 to 20 carbon atoms, and "a" represents an integer from 1 to 10. When multiple $B^1$ are present, they are each independently selected.

[Chem. 15]

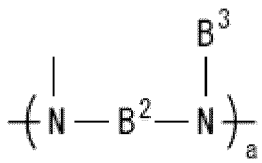 ・・・・ (III)

In the general formula (III), $B^2$ represents a single bond or a hydrocarbon group having 1 to 20 carbon atoms, $B^3$ represents an alkyl group having 1 to 20 carbon atoms, and "a" represents an integer from 1 to 10. When multiple $B^2$ and $B^3$ are each present, they are each independently selected.

[Chem. 16]

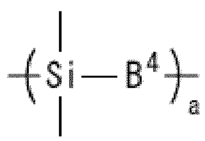 ・・・・ (IV)

In the general formula (IV), $B^4$ represents a single bond or a hydrocarbon group having 1 to 20 carbon atoms, and "a" represents an integer from 1 to 10. When multiple $B^4$ are present, they are each independently selected.

[Chem. 17]

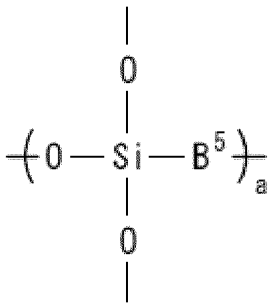

· · · · (V)

In the general formula (V), $B^5$ represents a single bond or a hydrocarbon group having 1 to 20 carbon atoms, and "a" represents an integer from 1 to 10. When multiple $B^5$ are present, they are each independently selected.

For $B^1$, $B^2$, $B^4$, and $B^5$ in the general formulas (II) to (V), examples of hydrocarbon groups having 1 to 20 carbon atoms include alkylene groups having 1 to 20 carbon atoms.

Preferably, in the general formula (I), A is represented by the general formula (II) or (III) and k represents 0.

More preferably, in the general formula (I), A is represented by the general formula (II) or (III) and k represents 0, and "a" represents an integer from 2 to 10 in the general formula (II) or (III).

Even more preferably, in the general formula (I), A is represented by the general formula (II) and k represents 0, and "a" represents an integer from 2 to 10 in the general formula (II).

Examples of such coupling agents include bis(3-trimethoxysilylpropyl)-[3-(2,2-dimethoxy-1-aza-2-silacyclopentyl)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentyl)propyl]-1,3-propanediamine, tetrakis[3-(2,2-dimethoxy-1-aza-2-silacyclopentyl)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, and bis[3-(2,2-dimethoxy-1-aza-2-silacyclopentyl)propyl]-(3-trimethoxysilylpropyl)-methyl-1,3-propanediamine, for example. Of these, tetrakis(3-trimethoxysilylpropyl)-1,3-propanediamine and tetrakis(3-trimethoxysilylpropyl)-1,3-bisaminomethylcyclohexane are particularly preferred.

The addition amount of the compound represented by general formula (I) as the coupling agent can be adjusted so that the styrene-butadiene copolymer and the coupling agent react at the desired stoichiometric molar ratio, which tends to achieve the desired degree of branching. The specific number of moles of the polymerization initiator relative to the number of moles of the coupling agent is preferably 5.0 times or more, more preferably 6.0 times or more. In this case, in the general formula (I), the number of functional groups in the coupling agent $((m-1) \times i + p \times j + k)$ is preferably an integer from 5 to 10, more preferably an integer from 6 to 10.

To obtain a modified styrene-butadiene rubber containing the specific high-molecular-weight component, the molecular weight distribution (Mw/Mn) of the styrene-butadiene copolymer is preferably 1.5 or more and 2.5 or less, more preferably 1.8 or more and 2.2 or less. Additionally, the molecular weight curve of the obtained modified styrene-butadiene rubber by GPC preferably has a single detected peak.

When the peak molecular weight of the modified styrene-butadiene rubber measured by GPC is defined as $Mp_1$ and the peak molecular weight of the styrene-butadiene copolymer is defined as $Mp_2$, it is preferable that the following formula holds:

$$(Mp_1/Mp_2) < 1.8 \times 10 - 12 \times (Mp_2 - 120 \times 10^4)^2 + 2.$$

$Mp_2$ is preferably $20 \times 10^4$ or more and $80 \times 10^4$ or less, and $Mp_1$ is more preferably $30 \times 10^4$ or more and $150 \times 10^4$ or less. $Mp_1$ and $Mp_2$ are determined using the method described in the examples below.

The modification rate of the modified styrene-butadiene rubber is preferably 30 mass% or more, more preferably 50 mass% or more, and even more preferably 70 mass% or more. When the modification rate is 30 mass% or more, the low-loss property and wear resistance of the tread rubber layer can be further improved.

After the reaction step, a deactivator, a neutralizer, etc., may be added to the copolymer solution as necessary. Examples of deactivators include, but are not limited to, water and alcohols such as methanol, ethanol, and isopropanol, for example. Examples of neutralizers include, but are not limited to, carboxylic acids such as stearic acid, oleic acid, and versatic acid (a mixture of highly branched carboxylic acids with 9 to 11 carbon atoms, averaging 10 carbon atoms); aqueous solutions of inorganic acids; and carbon dioxide gas, for example.

Additionally, from the perspective of preventing gel formation after polymerization and the perspective of

improving stability during processing, it is preferable to add an antioxidant such as 2,6-di-tert-butyl-4-hydroxytoluene (BHT), n-octadecyl-3-(4'-hydroxy-3',5'-di-tert-butylphenyl)propionate, or 2-methyl-4,6-bis[(octylthio)methyl]phenol, for example.

A known method can be used to recover the modified styrene-butadiene rubber from the polymer solution. Examples of the method for obtaining the polymer include, for example, a method in which, after separating the solvent by steam stripping or similar means, the polymer can be filtered, then further dehydrated and dried to obtain the polymer, a method in which the solution is concentrated in a flashing tank and then devolatilized using a vent extruder or similar apparatus, and a method in which the solution is directly devolatilized using a drum dryer or similar apparatus.

The modified styrene-butadiene rubber, obtained by reacting the coupling agent represented by the above general formula (I) with the styrene-butadiene copolymer, for example, is represented by the following general formula (VI).

[Chem. 18]

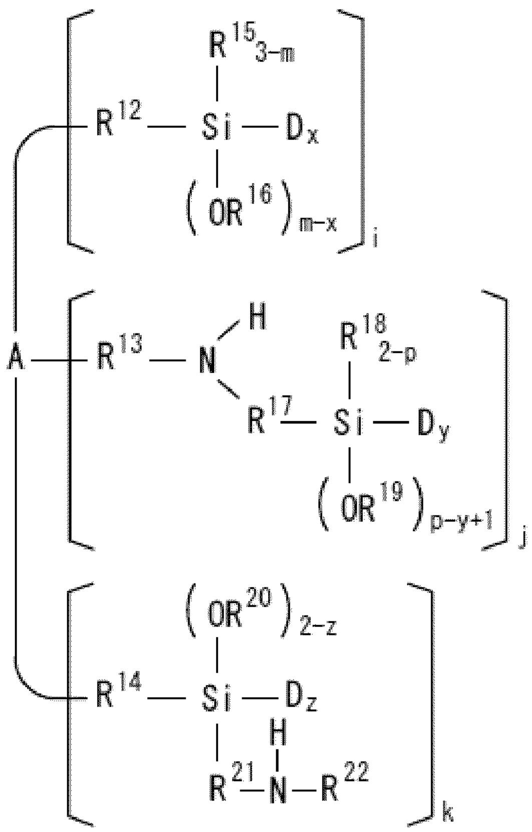

· · · · (VI)

In the general formula (VI), D represents a styrene-butadiene copolymer chain, and the weight-average molecular weight of the styrene-butadiene copolymer chain is preferably $10 \times 10^4$ to $100 \times 10^4$. The styrene-butadiene copolymer chain is the constituting unit of the modified styrene-butadiene rubber and is a structural unit derived from the styrene-butadiene copolymer, formed, for example, by reacting the styrene-butadiene copolymer with the coupling agent.

$R^{12}$, $R^{13}$, and $R^{14}$ each independently represent a single bond or an alkylene group having 1 to 20 carbon atoms.

$R^{15}$ and $R^{18}$ each independently represent an alkyl group having 1 to 20 carbon atoms.

$R^{16}$, $R^{19}$, and $R^{20}$ each independently represent a hydrogen atom or an alkyl group having 1 to 20 carbon atoms.

$R^{17}$ and $R^{21}$ each independently represent an alkylene group having 1 to 20 carbon atoms.

$R^{22}$ represents a hydrogen atom or an alkyl group having 1 to 20 carbon atoms.

m and x each represent an integer from 1 to 3, with $x \leq m$, p represents 1 or 2, y represents an integer from 1 to 3, with $y \leq (p + 1)$, and z represents an integer of 1 or 2.

When multiple D, $R^{12}$-$R^{22}$, m, p, x, y, and z are each present, they are each independently selected and may be the same or different.

Additionally, i represents an integer from 0 to 6, j represents an integer from 0 to 6, and k represents an integer from 0 to 6, with (i + j + k) being an integer from 3 to 10, and $((x \times i) + (y \times j) + (z \times k))$ being an integer from 5 to 30.

A represents a hydrocarbon group having 1 to 20 carbon atoms or an organic group containing at least one atom

selected from the group consisting of an oxygen atom, a nitrogen atom, a silicon atom, a sulfur atom, and a phosphorus atom and does not contain active hydrogen. The hydrocarbon group represented by A includes saturated, unsaturated, aliphatic, and aromatic hydrocarbon groups. Examples of organic groups that do not contain active hydrogen include organic groups that do not have functional groups with active hydrogen, such as hydroxyl groups (-OH), secondary amino groups (>NH), primary amino groups ($-NH_2$), and sulfhydryl groups (-SH), for example.

In the above general formula (VI), A is preferably represented by any of the above general formulas (II) to (V). When A is represented by any of the general formulas (II) to (V), the low-loss property and wear resistance of the tread rubber layer can be further improved.

-- Modified Styrene-Butadiene Rubber of Third Preferred Embodiment --

At least one terminal of the styrene-butadiene rubber (SBR) is preferably modified with a modifier including a compound (alkoxysilane) represented by general formula (1).

[Chem. 19]

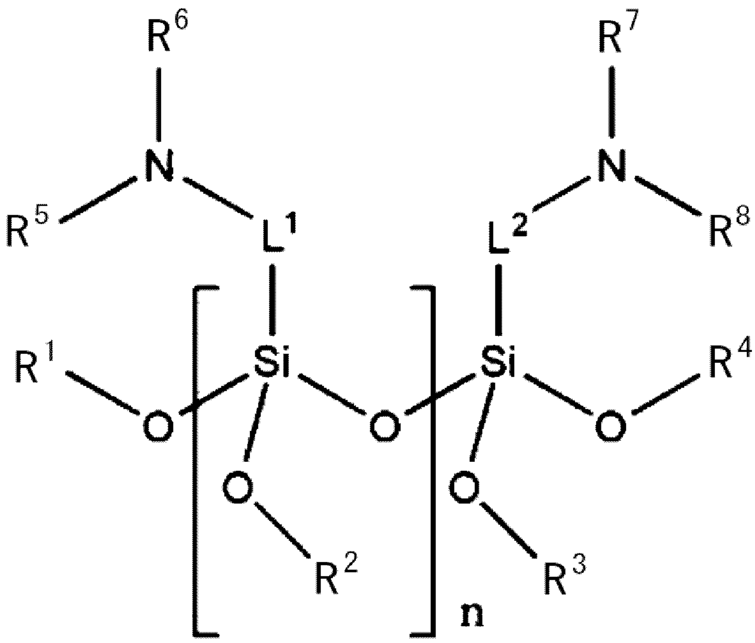

· · · · (1)

By using a styrene-butadiene rubber modified with a modifier containing the compound represented by the above general formula (1), which includes an oligosiloxane group and a tertiary amino group as filler-affinity acting groups, the dispersion of the filler, such as silica, can be enhanced. As a result, the dispersion of the filler in the rubber composition used for the tread rubber layer is improved, thereby significantly enhancing the low-loss property, reducing the rolling resistance of the tire, and improving high fuel efficiency.

In the above general formula (1), $R^1$ to $R^8$ each independently represent an alkyl group having 1 to 20 carbon atoms; $L^1$ and $L^2$ each independently represent an alkylene group having 1 to 20 carbon atoms; and n represents an integer from 2 to 4.

Specifically, in the formula (1), $R^1$ to $R^4$ each independently represent a substituted or unsubstituted alkyl group having 1 to 20 carbon atoms, and when $R^1$ to $R^4$ are substituted, they may each independently be substituted with at least one substituent selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl group having 6 to 12 carbon atoms, an aryloxy group having 6 to 12 carbon atoms, an alkanoyloxy group having 2 to 12 carbon atoms (Ra-COO-, where Ra is an alkyl group having 1 to 9 carbon atoms), an aralkyloxy group having 7 to 13 carbon atoms, an arylalkyl group having 7 to 13 carbon atoms, and an alkylaryl group having 7 to 13 carbon atoms.

More specifically, $R^1$ to $R^4$ may be substituted or unsubstituted alkyl groups having 1 to 10 carbon atoms, and even more specifically, $R^1$ to $R^4$ may each independently be substituted or unsubstituted alkyl groups having 1 to 6 carbon atoms.

Additionally, in the formula (1), $R^5$ to $R^8$ each independently represent a substituted or unsubstituted alkyl group having 1 to 20 carbon atoms, and specifically, they may be substituted or unsubstituted alkyl groups having 1 to 10 carbon

atoms, and even more specifically, they may be substituted or unsubstituted alkyl groups having 1 to 6 carbon atoms. When substituted, they may be substituted with the same substituents as described for $R^1$ to $R^4$.

If $R^5$ to $R^8$ are not alkyl groups but hydrolyzable substituents, the N-$R^5R^6$ and N-$R^7R^8$ bonding may undergo hydrolysis in the presence of moisture, converting to N-H, which can negatively impact the processability of the polymer.

More specifically, in the compound represented by the formula (1), $R^1$ to $R^4$ may be methyl groups or ethyl groups, and $R^5$ to $R^8$ may be alkyl groups having 1 to 10 carbon atoms.

The amino groups (N-$R^5R^6$ and N-$R^7R^8$) in the compound represented by the formula (1) are preferably tertiary amino groups. The tertiary amino groups impart more excellent processability to the compound represented by formula (1) when it is used as a modifier.

If a protecting group for protecting the amino group or a hydrogen atom is bonded to $R^5$ to $R^8$, the effect of the compound represented by the formula (1) may be prevented from being exhibited. When a hydrogen atom is bonded, the modification process may be hindered because the anion may react with the hydrogen and lose reactivity, making the modification reaction impossible. When a protecting group is bonded, the modification reaction can proceed, but if the protecting group is hydrolyzed and removed to yield an unprotected primary or secondary amino group during post-processing while remaining attached to the polymer chain, the unprotected primary or secondary amino group may increase the viscosity of the formulation during the subsequent compounding, leading to a decrease in processability.

Furthermore, in the compound represented by the formula (1), $L^1$ and $L^2$ each independently represent a substituted or unsubstituted alkylene group having 1 to 20 carbon atoms.

More specifically, $L^1$ and $L^2$ each independently represent an alkylene group having 1 to 10 carbon atoms, and more specifically, they may be alkylene groups having 1 to 6 carbon atoms, such as a methylene group, ethylene group, or propylene group.

Regarding $L^1$ and $L^2$ in the compound represented by the formula (1), the closer the distance between the Si atom and the N atom in the molecule, the more effective the compound becomes. However, if Si is directly bonded to N, the Si-N bond may break during subsequent processing steps. The resulting secondary amino group is likely to be washed away by water during post-processing, making it difficult for the amino group to promote bonding with the filler, such as silica, in the modified styrene-butadiene rubber. As a result, the effect of improving the dispersibility of the filler may be reduced. Considering the improvement effect based on the bond length between Si and N, $L^1$ and $L^2$ are more preferably each independently an alkylene group having 1 to 3 carbon atoms, such as methylene, ethylene, or propylene groups, and more specifically, $L^1$ and $L^2$ may be propylene groups. Furthermore, $L^1$ and $L^2$ may be substituted with the same substituents as described for $R^1$ to $R^4$.

Additionally, the compound represented by the formula (1) is preferably one of the compounds represented by the following structural formulas (1-1) to (1-5), for example. This is because more excellent low-loss property can be achieved.

[Chem. 20]

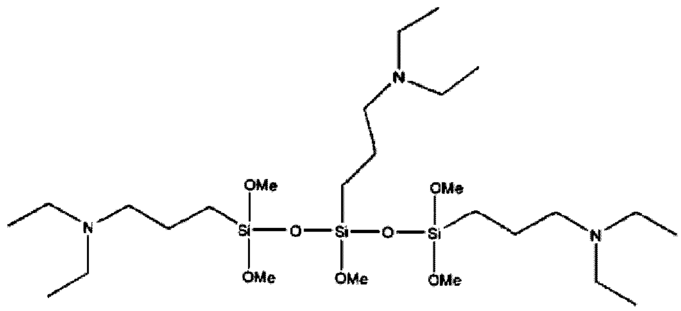

・・・・・(1-1)

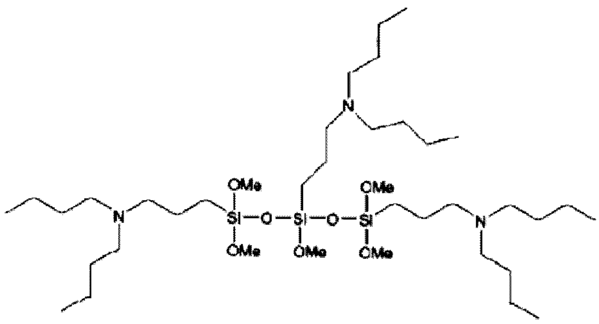

・・・・・(1-2)

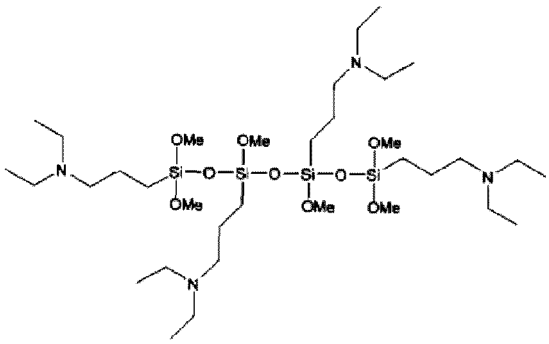

・・・・・(1-3)

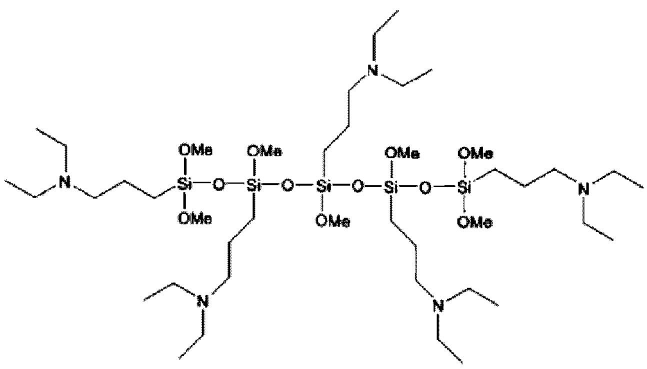

・・・・・(1-4)

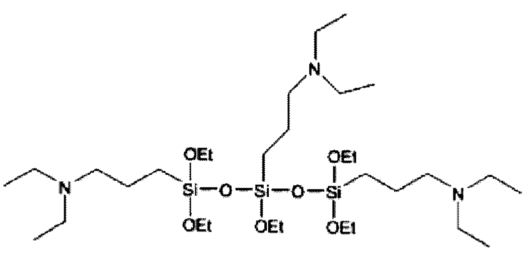

・・・・・(1-5)

In the compound represented by the formula (1), the alkoxysilane structure binds to the active terminal of the

styrene-butadiene copolymer, while the Si-O-Si structure and three or more amino groups attached to the terminal exhibit an affinity for the filler, such as silica. This enhances the bonding between the filler and the modified styrene-butadiene rubber compared to conventional modifiers containing only one amino group per molecule. Additionally, the degree of binding of the active terminal of the styrene-butadiene copolymer is uniform, and when the change in molecular weight distribution before and after coupling is observed, the molecular weight distribution remains constant after coupling, without being significantly increased compared to before coupling. Therefore, the physical properties of the modified styrene-butadiene rubber are not degraded, and the agglomeration of the filler in the rubber composition for the tread rubber layer is prevented, improving the dispersibility of the filler. Consequently, the processability of the rubber composition can be enhanced, and furthermore, the fuel efficiency and wet braking performance of the tire can be improved in a well-balanced manner.

It should be noted that the compound represented by the formula (1) can be produced through a condensation reaction represented by the reaction scheme below.

[Chem. 21]

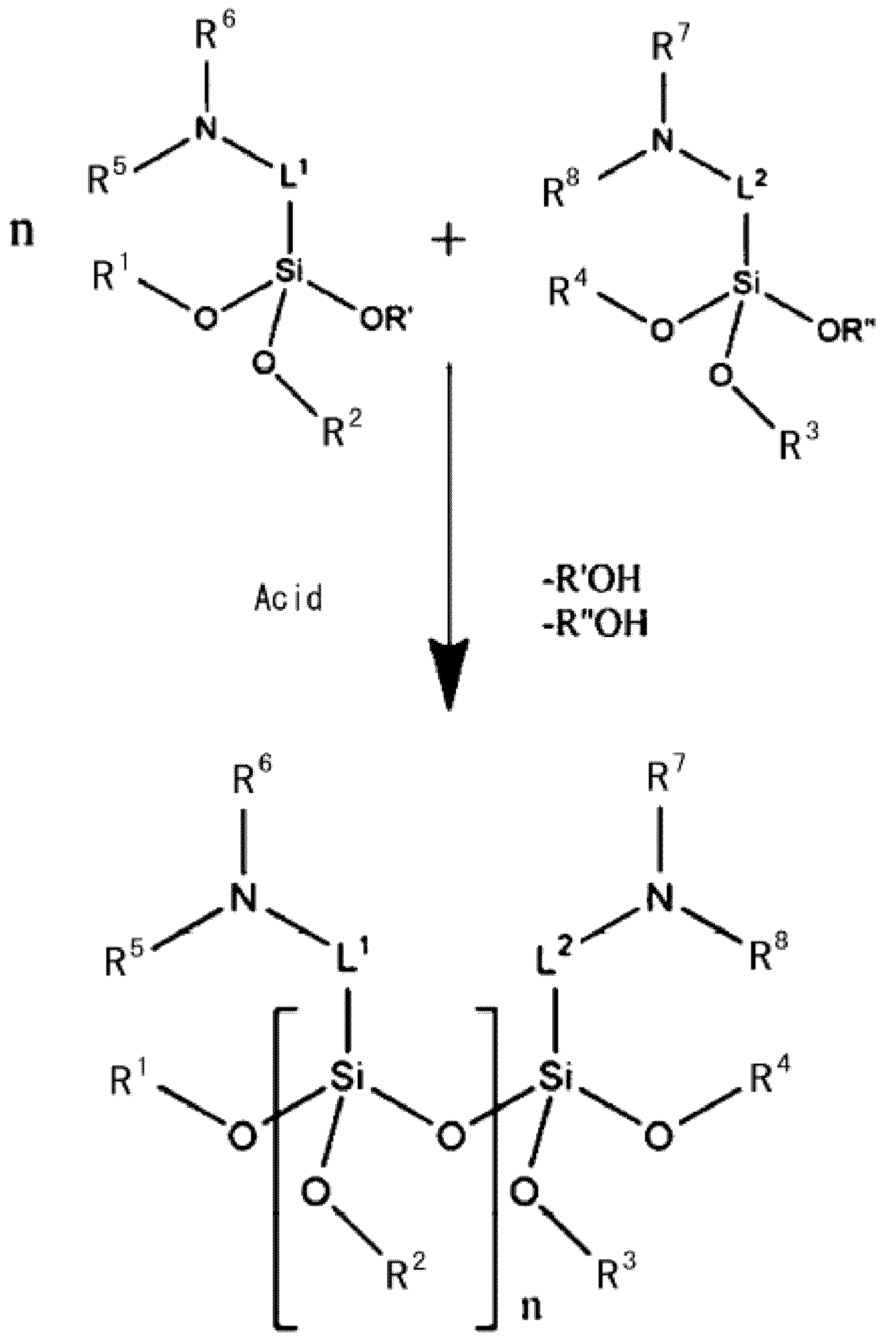


In this reaction scheme, $R^1$ to $R^8$, $L^1$ and $L^2$, and n are the same as those defined in the formula (1), and R' and R" are arbitrary substituents that do not affect the condensation reaction. For example, R' and R'' may each independently be identical to any one of $R^1$ to $R^4$.

The reaction in the above-mentioned reaction scheme proceeds in the presence of an acid, and any acid commonly used in condensation reactions can be used without limitation. A skilled person in the art can select the optimal acid according to various process variables for conducting the reaction, such as the type of reactor, starting materials, and reaction temperature.

The styrene-butadiene rubber modified with a modifier containing the compound represented by the formula (1) may have a narrow molecular weight distribution (Mw/Mn, also referred to as the "polydispersity index (PDI)") of 1.1 to 3.0. If the molecular weight distribution of the modified styrene-butadiene rubber is more than 3.0 or less than 1.1, the tensile properties and viscoelasticity of the tread rubber layer may be degraded. Considering the significance of the effects of improving tensile properties and viscoelasticity through control on the molecular weight distribution, the molecular weight distribution of the modified styrene-butadiene rubber is preferably in the range of 1.3 to 2.0. It should be noted that the modified styrene-butadiene rubber retains a molecular weight distribution similar to that of the styrene-butadiene

copolymer before modification due to the use of the modifier.

The molecular weight distribution of the modified styrene-butadiene rubber can be calculated from the ratio of weight-average molecular weight (Mw) to number-average molecular weight (Mn) (Mw/Mn). In calculation, the number-average molecular weight (Mn) is the common average of the individual polymer molecular weights, calculated by measuring the molecular weight of n polymer molecules, summing these values, and dividing by n. The weight-average molecular weight (Mw) represents the molecular weight distribution of the polymer composition. The overall molecular weight average can be expressed in grams per mole (g/mol).

The weight-average molecular weight and number-average molecular weight are each determined as polystyrene-equivalent molecular weights determined by gel permeation chromatography (GPC).

Furthermore, the modified styrene-butadiene rubber satisfies the molecular weight distribution conditions described above, at the same time, it may have a number-average molecular weight (Mn) ranging from 50,000 g/mol to 2,000,000 g/mol, more specifically 200,000 g/mol to 800,000 g/mol. The weight-average molecular weight (Mw) of the modified styrene-butadiene rubber is preferably 100,000 g/mol to 4,000,000 g/mol, and more specifically 300,000 g/mol to 1,500,000 g/mol.

If the weight-average molecular weight (Mw) of the modified styrene-butadiene rubber is less than 100,000 g/mol or the number-average molecular weight (Mn) is less than 50,000 g/mol, the tensile properties of the tread rubber layer may be degraded. On the other hand, if the weight-average molecular weight (Mw) is more than 4,000,000 g/mol or the number-average molecular weight (Mn) is more than 2,000,000 g/mol, the processability of the modified styrene-butadiene rubber is reduced, leading to poor workability of the rubber composition used for the tread rubber layer and mixing difficulties. Additionally, improving the physical properties of the tread rubber layer may become difficult.

More specifically, when the modified styrene-butadiene rubber satisfies the conditions of both the above-described molecular weight distribution and specific weight-average molecular weight (Mw) and number-average molecular weight (Mn) ranges, the viscoelasticity and processability of the rubber composition for the tread rubber layer can be improved in a well-balanced manner.

The modified styrene-butadiene rubber has a vinyl bond content in the butadiene portion of preferably 5% or more, more preferably 10% or more, and preferably 60% or less. By adjusting the vinyl bond content in the butadiene portion within this range, the glass transition temperature can be adjusted to an optimal range.

The Mooney viscosity (MV) at 100°C of the modified styrene-butadiene rubber may be 40 to 140, specifically 60 to 100. When the Mooney viscosity is within this range, the modified rubber exhibits more excellent processability.

The Mooney viscosity can be measured using a Mooney viscometer, such as the MV2000E available from Monsanto Company, at 100°C with a rotor speed of 2 ± 0.02 rpm using a large rotor, for example. The sample used for this measurement is allowed to stand at room temperature (23 ± 3°C) for at least 30 minutes, 27 ± 3 g of the sample is sampled and filled in the die cavity, and the platen is operated to perform the measurement.

The modified styrene-butadiene rubber is preferably modified at one terminal with a modifier containing a compound represented by the above general formula (1), as described above. However, it is more preferable that the other terminal is further modified with a modifier containing a compound represented by the following general formula (2). By modifying both terminals of the modified styrene-butadiene rubber, the dispersion of the filler in the rubber composition for the tread rubber layer can be further improved, allowing for an even higher balance of fuel efficiency and wet braking performance of the tire.

[Chem. 22]

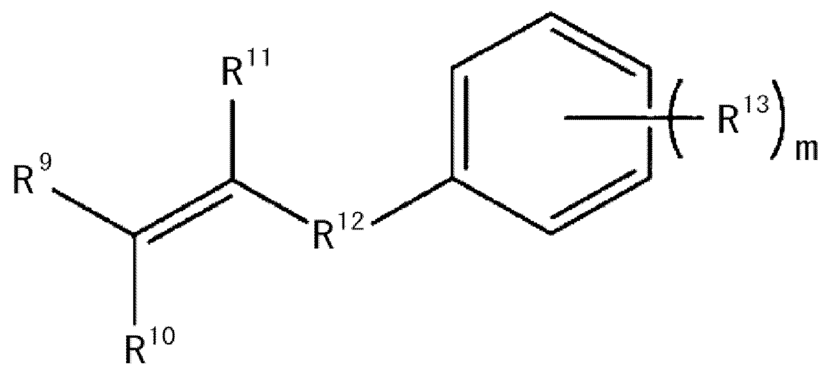

· · · · (2)

In the above general formula (2), $R^9$ to $R^{11}$ each independently represent hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to

30 carbon atoms; a cycloalkyl group having 5 to 30 carbon atoms; an aryl group having 6 to 30 carbon atoms; or a heterocyclic group having 3 to 30 carbon atoms.

Additionally, in the formula (2), $R^{12}$ represents a single bond; an alkylene group having 1 to 20 carbon atoms which may be substituted with a substituent or unsubstituted; a cycloalkylene group having 5 to 20 carbon atoms which may be substituted with a substituent or unsubstituted; or an arylene group having 5 to 20 carbon atoms which may be substituted with a substituent or unsubstituted, where the substituent is an alkyl group having 1 to 10 carbon atoms, a cycloalkyl group having 5 to 10 carbon atoms, or an aryl group having 6 to 20 carbon atoms.

In the formula (2), $R^{13}$ represents an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or an acting group represented by the following general formula (2a) or general formula (2b), m is an integer from 1 to 5, and at least one of $R^{13}$ is an acting group represented by the following general formula (2a) or general formula (2b), when m is an integer from 2 to 5, multiple $R^{13}$ groups may be identical or different.

[Chem. 23]

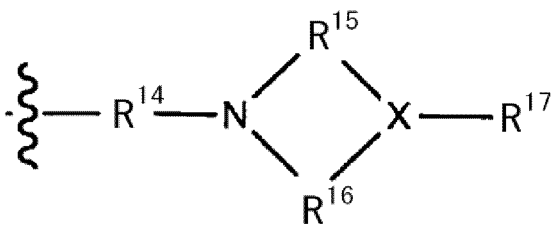

· · · · (2a)

In the above general formula (2a), $R^{14}$ represents an alkylene group having 1 to 20 carbon atoms which may be substituted with a substituent or unsubstituted; a cycloalkylene group having 5 to 20 carbon atoms which may be substituted with a substituent or unsubstituted; or an arylene group having 6 to 20 carbon atoms which may be substituted with a substituent or unsubstituted, where the substituent is an alkyl group having 1 to 10 carbon atoms, a cycloalkyl group having 5 to 10 carbon atoms, or an aryl group having 6 to 20 carbon atoms.

Furthermore, in the formula (2a), $R^{15}$ and $R^{16}$ each independently represent an alkylene group having 1 to 20 carbon atoms which may be substituted with an alkyl group having 1 to 10 carbon atoms, a cycloalkyl group having 5 to 10 carbon atoms, or an aryl group having 6 to 20 carbon atoms, or unsubstituted.

Additionally, in the formula (2a), $R^{17}$ represents hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, and X represents an N, O, or S atom, however, when X is O or S, $R^{17}$ is absent.

[Chem. 24]

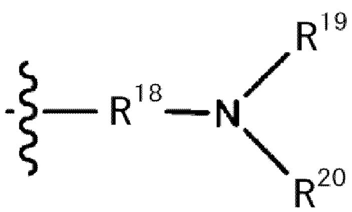

· · · · (2b)

In the above general formula (2b), $R^{18}$ represents an alkylene group having 1 to 20 carbon atoms which may be substituted with a substituent or unsubstituted; a cycloalkylene group having 5 to 20 carbon atoms which may be substituted with a substituent or unsubstituted; or an arylene group having 6 to 20 carbon atoms which may be substituted with a substituent or unsubstituted, where the substituent is an alkyl group having 1 to 10 carbon atoms, a cycloalkyl group having 5 to 10 carbon atoms, or an aryl group having 6 to 20 carbon atoms.

In the formula (2b), $R^{19}$ and $R^{20}$ each independently represent an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a

cycloalkyl group having 5 to 30 carbon atoms; an aryl group having 6 to 30 carbon atoms; or a heterocyclic group having 3 to 30 carbon atoms.

In the compound represented by the above general formula (2), $R^9$ to $R^{11}$ each independently represent hydrogen; an alkyl group having 1 to 10 carbon atoms; an alkenyl group having 2 to 10 carbon atoms; or an alkynyl group having 2 to 10 carbon atoms, $R^{12}$ represents a single bond or an unsubstituted alkylene group having 1 to 10 carbon atoms, and $R^{13}$ represents an alkyl group having 1 to 10 carbon atoms; an alkenyl group having 2 to 10 carbon atoms; an alkynyl group having 2 to 10 carbon atoms; or an acting group represented by the above general formula (2a) or general formula (2b), in the above general formula (2a), $R^{14}$ represents an unsubstituted alkylene group having 1 to 10 carbon atoms, $R^{15}$ and $R^{16}$ each independently represent an unsubstituted alkylene group having 1 to 10 carbon atoms, and $R^{17}$ represents an alkyl group having 1 to 10 carbon atoms; a cycloalkyl group having 5 to 20 carbon atoms; an aryl group having 6 to 20 carbon atoms; or a heterocyclic group having 3 to 20 carbon atoms, and in the above general formula (2b), $R^{18}$ represents an unsubstituted alkylene group having 1 to 10 carbon atoms, and $R^{19}$ and $R^{20}$ each independently represent an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the above general formula (2) can be a compound represented by the following structural formulas (2-1) to (2-3).

[Chem. 25]

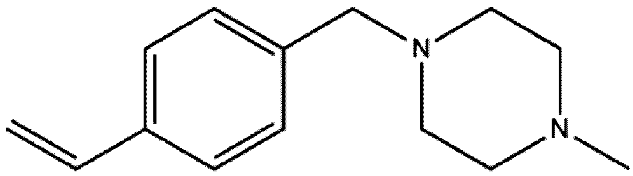

・・・・(2-1)

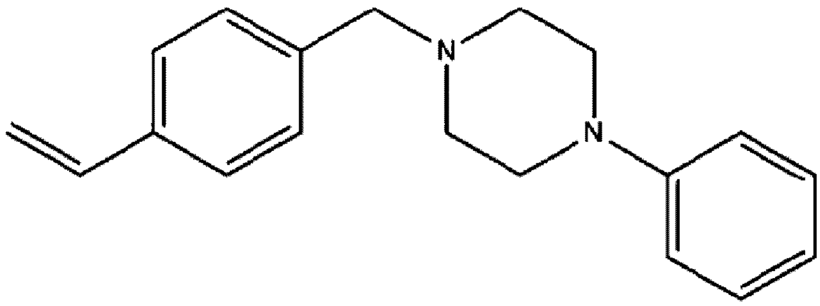

・・・・(2-2)

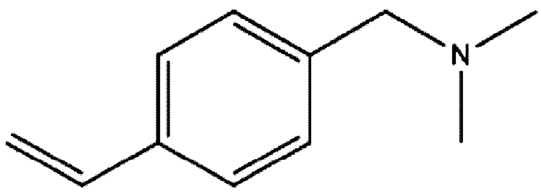

・・・・(2-3)

When the styrene-butadiene copolymer is modified using a modifier containing a compound represented by the above general formula (2), the modifier containing the compound represented by formula (2) is used as a modification initiator.

Specifically, for example, by polymerizing butadiene monomers and styrene monomers in the presence of a modifier containing a compound represented by formula (2) in a hydrocarbon solvent, the modification group derived from the compound represented by formula (2) can be introduced into the styrene-butadiene copolymer.

- Other Rubbers -

The rubber component may further include other rubbers, and the content of other rubbers in 100 parts by mass of

the rubber component is preferably 35 parts by mass or less. Examples of such other rubbers include butadiene rubber (BR), chloroprene rubber (CR), butyl rubber (IIR), halogenated butyl rubber, ethylene-propylene rubber (EPR, EPDM), fluororubber, silicone rubber, and urethane rubber. Among these, diene-based rubbers such as butadiene rubber (BR) and chloroprene rubber (CR) are preferable, with butadiene rubber (BR) being more preferable.

High-cis polybutadiene is preferable as butadiene rubber (BR), and it is preferable that the high-cis polybutadiene has a cis-1,4 bond content of 90 mass% or more. When the rubber component includes butadiene rubber, the content of butadiene rubber in 100 parts by mass of the rubber component is preferably within the range of 1 to 35 parts by mass.

(Resin Component)

The tread rubber layer contains a resin component. The resin component has a difference of the SP value with respect to the SP value of the isoprene skeleton rubber of 1.40 $(cal/cm^3)^{1/2}$ or less. Moreover, the tread rubber layer satisfies the following formula (1):

the mass ratio of the resin component / the isoprene skeleton rubber >_ 0.5 (1).

When the difference of the SP values between the resin component and the isoprene skeleton rubber is 1.40 $(cal/cm^3)^{1/2}$ or less, the resin component exhibits high compatibility with the isoprene skeleton rubber, which controls the mobility of the rubber component and improves the hysteresis loss (tanδ) in the low-temperature range, thereby enhancing the wet braking performance of the tire. From the perspective of further improvement in compatibility, the difference of the SP values between the resin component and the isoprene skeleton rubber is preferably 1.35 $(cal/cm^3)^{1/2}$ or less, more preferably 0.50 $(cal/cm^3)^{1/2}$ or less, even more preferably 0.45 $(cal/cm^3)^{1/2}$ or less, further preferably 0.30 $(cal/cm^3)^{1/2}$ or less, and even preferably 0.25 $(cal/cm^3)^{1/2}$ or less. When the difference of the SP values between the resin component and the isoprene skeleton rubber is 0.50 $(cal/cm^1)^{1/2}$ or less, the compatibility between the resin component and the isoprene skeleton rubber is further improved, further improving the wet braking performance of the tire.

Additionally, when the mass ratio of the resin component to the isoprene skeleton rubber [the resin component / the isoprene skeleton rubber] is 0.5 or more, the wet braking performance of the tire can be further improved. Preferably, the mass ratio of the resin component to the isoprene skeleton rubber [the resin component / the isoprene skeleton rubber] is preferably 0.65 or more, more preferably 0.7 or more, even more preferably 0.8 or more, and preferably 2.0 or less, more preferably 1.9 or less, and even more preferably 1.8 or less.

The content of the resin component is preferably 1 part by mass or more and less than 50 parts by mass per 100 parts by mass of the rubber component. When the content of the resin component in the tread rubber layer is 1 part by mass or more per 100 parts by mass of the rubber component, the effects of the resin component are sufficiently exhibited. When the content is less than 50 parts by mass, the resin component is less likely to precipitate from the tire, ensuring that the effects of the resin component are fully exhibited. From the perspective of further enhancing the effects of the resin component, the content of the resin component in the tread rubber layer is preferably 5 parts by mass or more, more preferably 7 parts by mass or more, even more preferably 9 parts by mass or more, further preferably 15 parts by mass or more, and even further preferably 17 parts by mass or more, per 100 parts by mass of the rubber component. From the perspective of suppressing the precipitation of the resin component from the tire and preventing degradation of the external appearance of the tire, the content of the resin component in the tread rubber layer is preferably 45 parts by mass or less, more preferably 40 parts by mass or less, per 100 parts by mass of the rubber component.

The resin component is preferably at least partially hydrogenated. By at least partially hydrogenating the resin component, the compatibility with the isoprene skeleton rubber is further improved, which enhances the control of the mobility of the rubber component and improves the hysteresis loss (tanδ) in the low-temperature range, thereby further improving the wet braking performance of the tire.

The resin component preferably has a softening point higher than 110°C and a polystyrene-equivalent weight-average molecular weight of 200 to 1600 g/mol. By applying a tread rubber layer containing such a resin component to a tire, the wear resistance of the tire can be further improved.

When the softening point of the resin component is higher than 110°C, the tread rubber layer can be sufficiently reinforced, further enhancing the wear resistance of the tire. From the perspective of the wear resistance of the tire, the softening point of the resin component is more preferably 116°C or higher, more preferably 120°C or higher, even more preferably 123°C or higher, and further preferably 127°C or higher. From the perspective of processability, the softening point of the resin component is preferably 160°C or lower, more preferably 150°C or lower, even more preferably 145°C or lower, further preferably 141°C or lower, and even further preferably 136°C or lower.

When the polystyrene-equivalent weight-average molecular weight of the resin component is 200 g/mol or higher, the resin component is less likely to precipitate from the tire, thereby fully exhibiting the effects of the resin component. Additionally, when it is 1600 g/mol or lower, the resin component is more likely to be compatible with the rubber

component.

From the perspective of suppressing the precipitation of the resin component from the tire and preventing degradation of the external appearance of the tire, the polystyrene-equivalent weight-average molecular weight of the resin component is preferably 500 g/mol or higher, more preferably 550 g/mol or higher, even more preferably 600 g/mol or higher, further preferably 650 g/mol or higher, and even further preferably 700 g/mol or higher. From the perspective of enhancing the compatibility of the resin component with the rubber component and further increasing the effectiveness of the resin component, the polystyrene-equivalent weight-average molecular weight of the resin component is preferably 1570 g/mol or lower, more preferably 1530 g/mol or lower, more preferably 1500 g/mol or lower, more preferably 1470 g/mol or lower, more preferably 1430 g/mol or lower, more preferably 1400 g/mol or lower, more preferably 1370 g/mol or lower, more preferably 1330 g/mol or lower, more preferably 1300 g/mol or lower, more preferably 1200 g/mol or lower, more preferably 1100 g/mol or lower, more preferably 1000 g/mol or lower, even more preferably 950 g/mol or lower.

The ratio ($Ts_{HR}/Mw_{HR}$) of the softening point ($Ts_{HR}$, unit: °C) to the weight-average molecular weight ($Mw_{HR}$, unit: g/mol) of the resin component is preferably 0.07 or higher, more preferably 0.083 or higher, more preferably 0.095 or higher, more preferably 0.104 or higher, more preferably 0.125 or higher, more preferably 0.135 or higher, more preferably 0.14 or higher, and even more preferably 0.141 or higher. Additionally, the ratio ($Ts_{HR}/Mw_{HR}$) is preferably 0.25 or lower, preferably 0.24 or lower, preferably 0.23 or lower, preferably 0.19 or lower, more preferably 0.18 or lower, and even more preferably 0.17 or lower.

Examples of the resin include $C_5$-based resins, $C_5$-$C_9$-based resins, $C_9$-based resins, terpene-based resins, dicyclopentadiene-based resins, and terpene-aromatic compound-based resins, and these resins can be used alone or in combination.

Additionally, the above-described resin component that is at least partially hydrogenated refers to a resin obtained by the reductive hydrogenation of a resin. Examples of the resin that serves as the raw material for the resin component that is hydrogenated include $C_5$-based resins, $C_5$-$C_9$-based resins, $C_9$-based resins, terpene-based resins, dicyclopentadiene-based resins, and terpene-aromatic compound-based resins, and these resins can be used alone or in combination.

Examples of the $C_5$-based resins include aliphatic petroleum resins obtained by (co)polymerizing the $C_5$ fraction obtained by thermal cracking of naphtha in the petrochemical industry.

The $C_5$ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. A commercially available product can be used as the $C_5$-based resin.

The $C_5$-$C_9$-based resins refer to $C_5$-$C_9$-based synthetic petroleum resins. Examples of these $C_5$-$C_9$-based resins include solid polymers obtained by polymerizing a petroleum-derived $C_5$-$C_{11}$ fraction using a Friedel-Crafts catalyst such as $AlCl_3$ or $BF_3$. More specifically, examples include a copolymer having, as the main component, styrene, vinyltoluene, α-methylstyrene, indene, and the like.

As the $C_5$-$C_9$-based resin, a resin including a small amount of $C_9$ or higher components is preferable in terms of compatibility with the rubber component. Here, including "a small amount of $C_9$ or higher component" means that the amount of $C_9$ or higher component in the total amount of the resin is less than 50 mass%, preferably 40 mass% or less. A commercially available product can be used as the $C_5$-$C_9$-based resin, for example.

The "$C_9$-based resins" refer to $C_9$-based synthetic petroleum resins, such as a solid polymer obtained by polymerizing a $C_9$ fraction using a Friedel-Crafts catalyst such as $AlCl_3$ or $BF_3$, for example.

Examples of the $C_9$-based resin include copolymers including indene, α-methylstyrene, vinyltoluene, or the like as main components.

The terpene-based resin is a solid-state resin obtained by compounding turpentine, which is obtained simultaneously when obtaining rosin from pine trees, or a polymerizable component separated from the turpentine, and then polymerizing the turpentine or the polymerizable component using a Friedel-Crafts catalyst. Examples of the terpene-based resins include β-pinene resins and α-pinene resins. A typical example of the terpene-aromatic compound-based resin is a terpene-phenol resin. The terpene-phenol resins may be obtained through various methods including: causing terpenes and various phenols to react with each other using a catalyst for the Friedel-Crafts reaction, or further condensing the resultant with formalin. The terpene as raw material is not limited. The terpene is preferably monoterpene hydrocarbon such as α-pinene or limonene, more preferably contains α-pinene, and is particularly preferably α-pinene. The resin may contain styrene, etc., in the skeleton.

The dicyclopentadiene-based resin refers to, for example, resins obtained by polymerizing dicyclopentadiene using a Friedel-Crafts catalyst, such as $AlCl_3$ or $BF_3$, or the like.

Moreover, the resin serving as the raw material for the resin component that is hydrogenated may include, for example, a resin obtained by copolymerizing a $C_5$ fraction and dicyclopentadiene (DCPD) ($C_5$-DCPD-based resin).

Here, if the dicyclopentadiene-derived component accounts for 50 mass% or more of the total amount of the resin, the $C_5$-DCPD-based resin is classified as a dicyclopentadiene-based resin. If the dicyclopentadiene-derived component accounts for less than 50 mass% of the total amount of the resin, the $C_5$-DCPD-based resin is classified

as a $C_5$-based resin. The same applies even if a small amount of a third component, etc., is included.

From the perspective of improving compatibility between the rubber component and the resin component, the resin component is preferably at least one selected from the group consisting of hydrogenated $C_5$-based resins, hydrogenated $C_5$-$C_9$-based resins, hydrogenated dicyclopentadiene-based resins (hydrogenated DCPD-based resins), and hydrogenated terpene-based resin, more preferably at least one selected from the group consisting of hydrogenated $C_5$-based resins and hydrogenated $C_5$-$C_9$-based resins, and even more preferably a hydrogenated $C_5$-based resin. Furthermore, it is preferably a resin that has a DCPD structure or a hydrogenated cyclic structure in at least monomers. When the resin component is at least one selected from the group consisting of hydrogenated $C_5$-based resins, hydrogenated $C_5$-$C_9$-based resins, hydrogenated dicyclopentadiene-based resins, and hydrogenated terpene-based resins, the wet braking performance of a tire comprising a tread rubber layer can be further improved, and high fuel efficiency can also be further enhanced.

(Filler)

The tread rubber layer contains a filler. By containing the filler, the reinforcing property of the tread rubber layer is improved.

The content of the filler in the tread rubber layer is preferably in the range of 40 to 125 parts by mass per 100 parts by mass of the rubber component. When the content of the filler in the tread rubber layer is 40 parts by mass or more per 100 parts by mass of the rubber component, the tread rubber layer is sufficiently reinforced, further improving the wear resistance of the tire. Additionally, when the content of the filler is 125 parts by mass or less, the elastic modulus of the tread rubber layer does not become excessively high, further improving the wet braking performance of the tire. From the perspective of reducing rolling resistance (improving high fuel efficiency), the content of the filler in the tread rubber layer is more preferably 45 parts by mass or more, even more preferably 50 parts by mass or more, and further preferably 55 parts by mass or more per 100 parts by mass of the rubber component. From the perspective of improving wet braking performance of the tire, the content of the filler in the tread rubber layer is more preferably 105 parts by mass or less, even more preferably 100 parts by mass or less, and further preferably 95 parts by mass or less per 100 parts by mass of the rubber component.

- Silica -

The filler preferably contains silica, and more preferably contains silica with a nitrogen adsorption specific surface area (BET method) of 80 $m^2/g$ or more and less than 330 $m^2/g$. When the nitrogen adsorption specific surface area (BET method) of the silica is 80 $m^2/g$ or more, the tire can be sufficiently reinforced, and the rolling resistance of the tire can be further reduced. When the nitrogen adsorption specific surface area (BET method) of the silica is less than 330 $m^2/g$, the elastic modulus of the tread rubber layer does not become excessively high, thereby further improving the wet braking performance of the tire. From the perspective of further reducing rolling resistance and improving the wear resistance of the tire, the nitrogen adsorption specific surface area (BET method) of the silica is preferably 110 $m^2/g$ or more, more preferably 130 $m^2/g$ or more, even more preferably 150 $m^2/g$ or more, and further preferably 180 $m^2/g$ or more. From the perspective of further improving the wet braking performance of the tire, the nitrogen adsorption specific surface area (BET method) of the silica is preferably 300 $m^2/g$ or less, more preferably 280 $m^2/g$ or less, and further preferably 270 $m^2/g$ or less.

Examples of the silica include wet silica (hydrous silicate), dry silica (anhydrous silicate), calcium silicate, and aluminum silicate. Among these, wet silica is preferable. These types of silica may be used alone or in combination of two or more types.

The silica may preferably be plant-derived silica. From the perspective of reducing environmental impact, silica derived from siliceous plants is preferred. Examples of such siliceous plants include mosses, ferns, horsetails, Cucurbitaceae plants, Urticaceae plants, and Poaceae plants, for example. Of these plants, Poaceae plants are preferred, that is, silica derived from Poaceae plants is preferred as the plant-derived silica. Silica derived from Poaceae plants is environmentally preferable from various aspects because raw materials can be locally sourced near tire manufacturing plants, reducing transportation and storage energy and costs.

Examples of the Poaceae plants include rice, bamboo, and sugarcane, with rice being the most preferred. Since rice is widely cultivated for food, it can be locally sourced in many regions. Additionally, rice husks are produced in large quantities as industrial waste, making them easily available in large quantities. Therefore, from the perspective of availability, silica derived from rice husks (hereinafter referred to as "rice husk silica") is particularly preferred. The utilization of rice husk silica is environmentally preferable in various aspects because it allows for the effective utilization of rice husks, which would otherwise be industrial waste, while also reducing transportation and storage energy and costs. The rice husk silica may be in the form of a powder of rice husk charcoal obtained by heating and carbonizing rice husks or precipitated silica produced by extracting rice husk ash with alkali, where the ash is generated when rice husks are burned

as fuel in biomass boilers. The method of producing rice husk charcoal is not particularly limited, and various known methods can be used. For example, rice husks can be pyrolyzed by steam roasting in a kiln to obtain rice husk charcoal. The thus-obtained rice husk charcoal can then be ground using a known pulverizer (e.g., a ball mill) and classified into a specified particle size range to obtain rice husk charcoal powder. The precipitated silica derived from rice husks can be produced by methods such as the one described in JP 2019-38728 A.

From the perspective of enhancing the mechanical strength of the tread rubber layer and further improving the wear resistance of the tire, the content of silica in the tread rubber layer is preferably 40 parts by mass or more, more preferably 45 parts by mass or more, even more preferably 50 parts by mass or more, and further preferably 55 parts by mass or more per 100 parts by mass of the rubber component. From the perspective of further improving wet braking performance of the tire, the content of silica in the tread rubber layer is preferably 125 parts by mass or less, more preferably 105 parts by mass or less, even more preferably 100 parts by mass or less, and further preferably 95 parts by mass or less per 100 parts by mass of the rubber component.

- Carbon black -

The filler may also preferably contain carbon black. The carbon black can reinforce the tread rubber layer and improve the wear resistance of the tire.

Carbon black is not particularly limited. Examples include GPF, FEF, HAF, ISAF, and SAF-grade carbon blacks, for example. These carbon blacks may be used alone or in combination of two or more types.

From the perspective of enhancing the wear resistance of the tread rubber layer and the tire having the tread rubber layer applied thereto, the content of carbon black in the tread rubber layer is preferably 1 part by mass or more, more preferably 3 parts by mass or more, and further preferably 5 parts by mass or more per 100 parts by mass of the rubber component. Furthermore, from the perspective of workability of the rubber composition used for the production of the tread rubber layer, the content of carbon black in the tread rubber layer (the rubber composition for the tread rubber layer) is preferably 20 parts by mass or less, more preferably 15 parts by mass or less per 100 parts by mass of the rubber component.

When the filler contains both silica and carbon black, the proportion of silica in the total amount of silica and carbon black is preferably 80 mass% or more and less than 100 mass%, and more preferably 90 mass% or more and less than 100 mass%. By setting the proportion of silica to 80 mass% or more, the mechanical strength of the tread rubber layer is improved, and the rolling resistance of the tire can be further reduced.

-- Other Fillers --

The filler may also contain, in addition to silica and carbon black, inorganic fillers such as clay, talc, calcium carbonate, and aluminum hydroxide, for example.

The other fillers described above are preferably contained so that the proportion of silica in the fillers is 70 mass% or more. When the proportion of silica in the fillers is 70 mass% or more, the mechanical strength of the tread rubber layer is improved, and the rolling resistance of the tire is further reduced. The proportion of silica in the fillers is more preferably 80 mass% or more, even more preferably 85 mass% or more, and further preferably 90 mass% or more and less than 100 mass%.

(Thermoplastic Styrenic Elastomer)

The tread rubber layer may include a thermoplastic styrenic elastomer (TPS). The thermoplastic styrenic elastomer (TPS) has styrenic polymer blocks (hard segments) and conjugated diene polymer blocks (soft segments), where the styrenic polymer portions form physical crosslinks as bridge points while the conjugated diene polymer blocks provide rubber elasticity. The double bonds in the conjugated diene polymer blocks (soft segments) may be partially or fully hydrogenated.

It should be noted that, although the thermoplastic styrenic elastomer (TPS) is thermoplastic, the rubber component (preferably, a diene-based rubber) is not thermoplastic. Therefore, in this specification, the thermoplastic styrenic elastomer (TPS) is not included in the rubber component. The content of the thermoplastic styrenic elastomer (TPS) is preferably in the range of 1 to 30 parts by mass per 100 parts by mass of the rubber component.

Examples of the thermoplastic styrenic elastomer (TPS) include styrene/butadiene/styrene (SBS) block copolymer, styrene/isoprene/styrene (SIS) block copolymer, styrene/butadiene/isoprene/styrene (SBIS) block copolymer, styrene/butadiene (SB) block copolymer, styrene/isoprene (SI) block copolymer, styrene/butadiene/isoprene (SBI) block copolymer, styrene/ethylene/butylene/styrene (SEBS) block copolymer, styrene/ethylene/propylene/styrene (SEPS) block copolymer, styrene/ethylene/ethylene/propylene/styrene (SEEPS) block copolymer, styrene/ethylene/butylene (SEB) block copolymer, styrene/ethylene/propylene (SEP) block copolymer, and styrene/ethylene/ethylene/propylene

(SEEP) block copolymer.

(Other Components)

The tread rubber layer may appropriately include, within a range that does not impair the object of the present disclosure, the above-described rubber component, resin component, filler, thermoplastic styrenic elastomer, and, if necessary, various components commonly used in the rubber industry, such as silane coupling agents, antioxidants, waxes, softeners, processing aids, stearic acid, zinc oxide (zinc white), vulcanization accelerators, and vulcanizing agents, for example. Commercial products are suitable for use as these compounding agents.

When the tread rubber layer contains silica, a silane coupling agent is preferably included to enhance the effect of the silica. Examples of silane coupling agents include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. The content of the silane coupling agent is preferably in the range of 2 to 20 parts by mass, more preferably in the range of 5 to 15 parts by mass per 100 parts by mass of the silica.

Examples of the antioxidants include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), and N,N'-diphenyl-p-phenylenediamine (DPPD). The content of the antioxidants is not particularly limited and is in the range of preferably 0.1 to 5 parts by mass, more preferably 1 to 4 parts by mass, per 100 parts by mass of the rubber component.

Examples of the wax include paraffin wax and microcrystalline wax, for example. The content of the waxes is not particularly limited and is in the range of preferably 0.1 to 5 parts by mass, more preferably 1 to 4 parts by mass, per 100 parts by mass of the rubber component.

The content of the zinc oxide (zinc white) is not particularly limited and is in the range of preferably 0.1 to 10 parts by mass, more preferably 1 to 8 parts by mass, per 100 parts by mass of the rubber component.

Examples of the vulcanization accelerators include sulfenamide vulcanization accelerators, guanidine vulcanization accelerators, thiazole vulcanization accelerators, thiuram vulcanization accelerators, and dithiocarbamate vulcanization accelerators. These vulcanization accelerators may be used alone, or two or more of these may be used in combination. The content of the vulcanization accelerators is not particularly limited and is preferably in the range of 0.1 to 5 parts by mass, more preferably in the range of 0.2 to 4 parts by mass, per 100 parts by mass of the rubber component.

Examples of the vulcanizing agent include sulfur. The content of the vulcanizing agent is preferably in the range of 0.1 to 10 parts by mass, more preferably in the range of 1 to 4 parts by mass as sulfur per 100 parts by mass of the rubber component.

(Manufacturing Method of Tread Rubber Layer)

The manufacturing method of the tread rubber layer is not particularly limited. For example, a rubber composition for the tread rubber layer can be produced by compounding the above-described rubber component, resin component, and filler with various components appropriately selected as needed, followed by kneading, heat treatment, extrusion, etc. Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, that are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc. for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, about 100 to 190°C.

<<Carcass Ply>>

In the pneumatic tire of the present embodiment, the carcass ply 9 is formed by the coating PET fiber cords 10 with the coating rubber 20, as illustrated in FIG. 2.

The carcass ply 9 of the pneumatic tire of the present embodiment has a total gauge of 1.2 mm or less, and satisfies the following formula (2):

$$(A/B)\ /\ \text{the cord total fineness} \geq 0.3 \qquad \ldots (2),$$

where A is defined as: the cord strength (N) × the fiber occupancy rate,

the fiber occupancy rate is defined as: the cross-sectional area of a PET fiber cord ($mm^2$) / (the total gauge of the carcass ply (mm) × (the diameter of a PET fiber cord (mm) + the inter-cord spacing of the PET fiber cords (mm))), and
B is defined as: tanδ of the coating rubber × the rubber occupancy rate,
the rubber occupancy rate is defined as: (1 - the fiber occupancy rate), and
the cord total fineness is the sum (dtex) of finenesses of PET fibers forming a cord.

Here, A in the above formula (2) represents "the cord strength (N) × the fiber occupancy ratio". By increasing the value of A, the strength of the carcass ply can be enhanced. Furthermore, the fiber occupancy ratio in A is defined as "the cross-sectional area of a PET fiber cord ($mm^2$) / (the total gauge of the carcass ply (mm) × (the diameter of a PET fiber cord (mm) + the inter-cord spacing of the PET fiber cords (mm)". By increasing this value, it is possible to reduce the thickness of the coating rubber 20, which contributes to the reduction in rolling resistance. Additionally, B in the above formula (2) represents the "tan δ of the coating rubber × rubber occupancy rate". By reducing this value, the volume of rubber in the carcass ply is reduced, which contributes to weight reduction and the reduction in rolling resistance. Moreover, the cord total fineness in the above formula (2) represents the sum of the finenesses of PET fibers 11. As this value increases, the thickness of the PET fiber 10 is increased, meaning higher strength but also increased mass.

In the present disclosure, by adjusting the ratio A/B to the cord total fineness to 0.3 or more, it becomes possible to increase the strength of the carcass ply even when cords with a low fineness are used (when the mass of the PET fiber cords is small).

From a similar perspective, it is preferable that the carcass ply 9 of the pneumatic tire in of the present embodiment satisfies the following formula (2)':

$$(A/B)\ /\ \text{the cord total fineness} \geq 0.45 \qquad \ldots (2)'.$$

When the carcass ply satisfies the above formula (2), the cut resistance and high fuel efficiency of the pneumatic tire are effectively achieved in a well-balanced manner.

The PET fiber cords and coating rubber that constitute the carcass ply for the pneumatic tire of the present embodiment will now be described.

(PET Fiber Cord)

The PET fiber cords are cords made of polyethylene terephthalate (PET) fibers and have an excellent balance of properties such as strength, modulus, dimensional stability, and manufacturing cost.

The PET fiber cords may be single-twist cords or multi-twist cords, each composed of two or more raw yarns. The structure of the PET fiber cords can be appropriately selected according to the required performances of the PET fiber cords.

The raw material for the PET fiber cords is not particularly limited and may be derived from synthetic products, may be derived from biological resources such as plant-based resources, animal-based resources, or microbial resources, may be obtained by mechanical recycling involving grinding, melting, and re-spinning resin products, or may be obtained by chemical recycling involving depolymerization and repolymerization of resin products, for example.

The polyethylene terephthalate (PET) fiber may include polyethylene terephthalate obtained by mechanical recycling or chemical recycling of PET products, clothing, etc., for example.

Moreover, the cord strength of the PET fiber cord is preferably 160 N or more, and more preferably 165 N or more. The strength of the carcass ply can be further enhanced, effectively achieving both cut resistance and fuel efficiency in the pneumatic tire.

It should be noted that the cord strength of the PET fiber cord can be appropriately controlled by adjusting, for example, the total fineness, the number of twists, and the raw yarn strength of the cord, and other factors.

Additionally, the raw yarn strength of a PET fiber constituting the PET fiber cord is preferably 7.8 cN/dtex or more, and more preferably 8.0 cN/dtex or more. Since this results in an increased strength of the PET fiber cord, the strength of the carcass ply can be further increased.

It should be noted that the raw yarn strength of the PET fiber can be increased by adjusting the molecular weight, crystallinity, and crystal orientation of the PET resin, and other factors.

Furthermore, the total fineness of the PET fiber cords is preferably from 1000 to 4800 dtex, and more preferably from 2000 to 4000 dtex. When the total fineness of the PET fiber cords is 1000 dtex or more, the strength of the carcass ply can be further increased. On the other hand, when the total fineness of the PET fiber cords is 4800 dtex or less, the degradation of rolling resistance when the cords are applied to a tire as a carcass ply can be more reliably suppressed.

Here, the total fineness of the PET fiber cords refers to the sum of the finenesses of the PET fibers constituting the cords, and the total fineness can be controlled by adjusting the fineness and the number of twists of the PET fibers, and other factors.

Furthermore, the fineness of the PET fibers is preferably 550 to 2200 dtex, and more preferably 1100 to 1670 dtex. When the fineness of the PET fibers is 550 dtex or more, the strength of the carcass ply can be further increased. On the other hand, when the fineness of the PET fibers is 2200 dtex or less, it is possible to more reliably suppress the degradation of rolling resistance when the cords are applied to a tire as a carcass ply.

It should be noted that the fineness of the PET fibers can be controlled by adjusting the type and manufacturing conditions of fibers, and other factors.

The fineness of the PET fiber cords is preferably 1100/2 to 2000/2 dtex. This indicates the fineness when two fibers are twisted together. When the fineness of the PET fiber cords is within the above range, the cut resistance and high fuel efficiency of the pneumatic tire are effectively achieved in a well-balanced manner.

From the perspective of maintaining plunger energy, the diameter of a PET fiber cord is preferably 0.45 mm or more, and more preferably 0.50 mm or more. Furthermore, from the perspective of reducing rolling resistance, the diameter of a PET fiber cord is preferably 0.80 mm or less, and more preferably 0.70 mm or less.

Additionally, the density of cords of the PET fiber cords is preferably 120 cords/10 cm or more, and more preferably 140 cords/10 cm or more, because the strength of the carcass ply is enhanced.

It should be noted that the density of cords of the PET fiber cords refers to the number of PET fiber cords per 10 cm in the direction in which the cords are aligned in the carcass ply (in FIG. 1, the density of cords corresponds to the number of PET fiber cords per 10 cm in the horizontal direction).

Furthermore, the fiber occupancy rate in the carcass ply is not particularly limited as long as the above formula (2) is satisfied. However, from the perspective of balancing high strength and low rolling resistance characteristic when applied to a tire at an even higher level, the fiber occupancy rate is preferably 30% or more and 40% or less, and more preferably 35% or more and 40% or less.

It should be noted that the fiber occupancy rate, as described above, is determined as: the cross-sectional area of a PET fiber cord ($mm^2$) / (the total gauge of the carcass ply (mm) × (the diameter of a PET fiber cord (mm) + the inter-cord spacing of the PET fiber cords (mm))).

Here, the diameter of a PET fiber cord refers to the diameter "a" of a PET fiber cord 10 that constitutes the carcass ply 9 in a cross-section, as illustrated in FIG. 2.

In addition, the cross-sectional area of a PET fiber cord refers to the area S of the cross-section of a PET fiber cord 10 that constitutes the carcass ply 9, as illustrated in FIG. 2.

Furthermore, the inter-cord spacing of the PET fiber cords refers to the shortest distance b between adjacent cords 10 in the cross-section of the PET fiber cords 10 that constitute the carcass ply 9, as illustrated in FIG. 2.

(Adhesive Composition)

It is preferable that the PET fiber cords are subjected to an adhesive treatment using an adhesive composition.

The adhesive composition may include, for example, a thermoplastic polymer (A) having at least one pendant group with a crosslinkable functional group and substantially free of carbon-carbon double bonds with addition reactivity in the main chain structure thereof, a thermally reactive-type aqueous urethane resin (B), and an epoxy compound (C), and optionally further include a rubber latex (D). By performing an adhesive treatment on the PET fiber cords using such an adhesive composition, the adhesion between the PET fiber cords and the elastomer (coating rubber) under high-temperature conditions can be improved.

Conventionally, the adhesive treatment of PET fiber cords involves a so-called two-bath process in which epoxy

or isocyanate is applied to the surfaces of the cords, followed by treatment with a resin formed by mixing resorcinol, formaldehyde, and latex (hereinafter referred to as RFL resin). However, with this approach, the resin used in the first-stage bath can become extremely hard, increasing the strain input into the PET fiber cords, which can decrease the fatigue resistance of the cords. Additionally, while such an RFL resin can achieve sufficient adhesion between the cords and elastomer at room temperature, the adhesion may be reduced significantly at high temperatures of 130°C or higher. In contrast, usage of a single-stage bath mixture (adhesive composition) containing a thermoplastic polymer (A) having at least one pendant group with a crosslinkable functional group and substantially free of carbon-carbon double bonds with addition reactivity in the main chain structure thereof, a thermally reactive-type aqueous urethane resin (B), and an epoxy compound (C) can ensure sufficient adhesion with the elastomer (coating rubber) even at high temperatures of 180°C or higher without hardening the PET fiber cords.

The main chain of the thermoplastic polymer (A) has primarily a linear structure, and the main chain is preferably an ethylene-based addition polymer such as an acrylic polymer, vinyl acetate-based polymer, and vinyl acetate-ethylene-based copolymer; an urethane-based high-molecular polymer; or the like, for example. However, the thermoplastic polymer (A) is not limited to the above-mentioned ethylene-based addition polymer or urethane-based high-molecular polymer, as long as it can inhibit flowability of the resin at high temperatures and ensure the rupture tenacity of the resin through crosslinking of the functional group on the pendant group.

Preferred examples of the functional group on the pendant group of the thermoplastic polymer (A) include oxazoline groups, bismaleimide groups, (blocked) isocyanate groups, aziridine groups, carbodiimide groups, hydrazino groups, epoxy groups, and epithio groups.

The thermoplastic polymer (A), the thermally reactive-type aqueous urethane resin (B), the epoxy compound (C), and the rubber latex (D) described above that can be used may be those disclosed in JP 2023-040157 A or those disclosed in JP 2023-030762 A.

In the adhesive treatment of the PET fiber cords, a three-component mixture (adhesive composition) of the thermoplastic polymer (A), the thermally reactive-type aqueous urethane resin (B), and the epoxy compound (C) is preferably used as the treatment liquid for the first-stage bath, and a conventional RFL resin liquid is used as the treatment liquid for the second-stage bath. Additionally, in the above adhesive treatment, it is also possible to perform single-stage bath treatment using a mixture (adhesive composition) of the thermoplastic polymer (A), the thermally reactive-type aqueous urethane resin (B), the epoxy compound (C), and the rubber latex (D).

In the above-described adhesive composition, the proportion of the thermoplastic polymer (A) (dry mass ratio) is preferably 2 to 75%, the proportion of the thermally reactive-type aqueous urethane resin (B) (dry mass ratio) is preferably 15 to 87%, the proportion of the epoxy compound (C) (dry mass ratio) is preferably 11 to 70%, and the proportion of the rubber latex (D) (dry mass ratio) is preferably 20% or less.

In the meantime, from the perspective of environmental protection, it is preferable to use a dip treatment solution that does not contain resorcinol and formaldehyde as the adhesive composition for the PET fiber cords. An example of such a dip treatment solution is, for example, a composition containing a rubber latex (a) with an unsaturated diene and one or more compounds (b) selected from compounds containing a skeletal structure made of polyether and an amine functional group, compounds with an acrylamide structure, polypeptides, polylysine, and carbodiimides. Additionally, an example of such a dip treatment solution is a composition containing, in addition to the above-described rubber latex (a) and compound (b), one or more selected from an aqueous compound (c) with a (thermally dissociative blocked) isocyanate group, a polyphenol (d), and a polyvalent metal salt (e).

Furthermore, as a dip treatment solution that does not contain resorcinol and formaldehyde, a composition containing polyphenols (I) and aldehydes (II) may also be used. Such a composition may further include at least one of an isocyanate compound (III) and a rubber latex (IV), in addition to the polyphenols (I) and the aldehydes (II).

When an adhesive composition to treat (coat) the PET fiber cords with adhesive contains the polyphenols (I) and the aldehydes (II), good adhesion can be achieved even when resorcinol is not used, considering environmental load.

[Polyphenols (I)]

When the adhesive composition includes the polyphenols (I) as a resin component, the adhesion with the PET fiber cords can be enhanced. Here, the polyphenols (I) are typically water-soluble polyphenols and are not particularly limited as long as they are polyphenols other than resorcinol (resorcinol). In the polyphenols (I), the number of aromatic rings or hydroxyl groups can be appropriately selected.

From the perspective of achieving further excellent adhesion, the polyphenols (I) preferably have two or more hydroxyl groups, and more preferably have three or more hydroxyl groups. When the polyphenols have three or more hydroxyl groups, the polyphenols or the condensates thereof dissolve in the adhesive composition (dip treatment solution) containing water. Since this allows the polyphenols to be uniformly distributed in the adhesive composition, further excellent adhesion can be achieved. Furthermore, if the polyphenols (I) are polyphenols containing two or more aromatic rings, each aromatic ring may have two or three hydroxyl groups located at the ortho, meta, or para positions.

As the polyphenols (I), the polyphenol compounds disclosed in WO 2022/130879 A1 can be used, for example. These polyphenols (I) may be used alone or in combination of two or more.

[Aldehydes (II)]

When the adhesive composition includes the aldehydes (II) as a resin component in addition to the above-described polyphenols (I), high adhesion can be achieved in conjunction with the above-described polyphenols (I). Here, the aldehydes (II) are not particularly limited and can be selected as appropriate depending on the required performances. It should be noted that in this specification, the aldehydes (II) encompass derivatives of aldehydes derived from aldehydes.
Examples of the aldehydes (II) include, for example, monoaldehydes such as formaldehyde, acetaldehyde, butyraldehyde, acrolein, propionaldehyde, chloral, butyraldehyde, caproaldehyde, and allyl aldehyde; aliphatic dialdehydes such as glyoxal, malonaldehyde, succinaldehyde, glutaraldehyde, and adipaldehyde; aldehydes containing an aromatic ring; and dialdehyde starch. These aldehydes (II) can be used alone or in combination of two or more.
The aldehydes (II) are preferably aldehydes having an aromatic ring or contain aldehydes having an aromatic ring because they provide further excellent adhesion. Moreover, the aldehydes (II) are preferably free of formaldehyde. Here, "free of formaldehyde" means, for example, that the formaldehyde content is less than 0.5 mass% of the total mass of the aldehydes.
In the adhesive composition, it is preferable that the polyphenols (I) and the aldehydes (II) are in a condensed state, and the mass ratio of aldehydes having an aromatic ring to polyphenols (the content of aldehydes having an aromatic ring/content of polyphenols) is 0.1 or more and 3 or less. This is because this ratio optimizes the hardness and adhesion of the resin formed as a condensation product of the polyphenols and the aldehydes having an aromatic ring. From a similar perspective, in the adhesive composition, the mass ratio of polyphenols to aldehydes having an aromatic ring (the content of aldehydes having an aromatic ring/content of polyphenols) is more preferably 0.25 or more, and more preferably 2.5 or lower.
The above-described mass ratio refers to the mass ratio based on the mass of the dried materials (solid content ratio).
In addition, the total content of the polyphenols (I) and the aldehydes (II) in the adhesive composition is preferably 3 to 30 mass% because further excellent adhesion is ensured without compromising workability, etc. From a similar perspective, the total content of the polyphenols (I) and the aldehydes (II) in the adhesive composition is more preferably 5 mass% or more and more preferably 25 mass% or less.
The above-described total content also refers to the total content based on the mass of the dried materials (solid content ratio).

[Isocyanate Compound (III)]

The adhesive composition preferably contains an isocyanate compound (III), in addition to the polyphenols (I) and the aldehydes (II) described above. In this case, the adhesion of the adhesive composition is further enhanced through the synergistic effect with the polyphenols (I) and the aldehydes (II).
Here, the isocyanate compound (III) is a compound that has an effect of promoting adhesion to the resin material, which is the adherend of the adhesive composition (e.g., phenol/aldehyde resin obtained through condensation of the polyphenols (I) and the aldehydes (II)), and is compound contains an isocyanate group as a polar functional group. The isocyanate compound (III) may be used alone or in combination of two or more.
The isocyanate compound (III) is not particularly limited, but from the perspective of further improving adhesion, it preferably includes a (blocked) isocyanate group-containing aromatic compound. The inclusion of a (blocked) isocyanate group-containing aromatic compound in the adhesive composition results in the distribution of the (blocked) isocyanate group-containing aromatic compound near the interface between the PET fiber cords and the adhesive composition, thereby providing an effect of further promoting the adhesion. This effect allows the adhesive composition to achieve an even higher level of adhesion with the PET fiber cords.
Examples of (blocked) isocyanate group-containing aromatic compounds that may be used include those described in JP 2023-040157 A and those described in JP 2023-030762 A.
The content of the isocyanate compound (III) in the above-described adhesive composition is not particularly limited, but from the perspective of more reliably ensuring further excellent adhesion, the content is preferably 5 to 65 mass%. From a similar perspective, the content of the isocyanate compound (III) in the adhesive composition is more preferably 10 mass% or more and more preferably 45 mass% or less.
It should be noted that the above-mentioned content is the content based on the mass of the dried materials (solid content ratio).

[Rubber Latex (IV)]

The adhesive composition may substantially contain a rubber latex (IV), in addition to the polyphenol (I), the aldehydes (II), and the isocyanate compound (III) described above. This allows the adhesive composition to further enhance adhesion to rubber members.

Here, the rubber latex (IV) is not particularly limited and examples include, besides natural rubber (NR), synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinyl pyridine-styrene-butadiene copolymer rubber (Vp). These rubber latexes (IV) may be used alone or in combination of two or more types.

When preparing an adhesive composition containing the rubber latex (IV), it is preferable to mix the rubber latex (IV) with the phenols (I) and the aldehydes (II) before the isocyanate compound (III) is added.

The content of the rubber latex (IV) in the adhesive composition is preferably 20 mass% or more, more preferably 25 mass% or more, and is preferably 70 mass% or less, and more preferably 60 mass% or less.

The method for producing the adhesive composition is not particularly limited, but examples include, for example, a method of mixing and aging raw materials such as the polyphenols (I), the aldehydes (II), and the rubber latex (IV), or a method of mixing and aging the polyphenols (I) and the aldehydes (II) first, then adding the rubber latex (IV) followed by further aging. In cases where the raw materials of the adhesive composition include the isocyanate compound (III), the method may include adding the rubber latex (IV), aging the mixture, and then adding the isocyanate compound (III).

(Coating Rubber)

The coating rubber refers to the rubber that coats the PET fiber cords.

In the carcass ply for the pneumatic tire of the present embodiment, the coating rubber is not particularly limited, other than defining the rubber occupancy rate of the coating rubber so as to satisfy the above formula (2). The composition and physical properties of the coating rubber may be appropriately selected according to the required performances.

For example, from the perspective of further improving the low rolling resistance characteristic when applied to a tire as a carcass ply, it is preferable that the coating rubber contains a rubber component containing 60 mass% or more of natural rubber and 40 mass% or less of non-oil extended styrene-butadiene rubber, and 30 to 60 parts by mass of carbon black with a nitrogen adsorption specific surface area ($N_2SA$) of 60 $m^2/g$ or less per 100 parts by mass of the rubber component. Such a coating rubber composition has excellent low heat generation properties, enabling a further reduction in rolling resistance when the composite is applied to a tire.

There are no particular limitations on the rubber component of the coating rubber; however, as described above, the rubber component preferably contains 60 mass% or more of natural rubber and 40 mass% or less of non-oil extended styrene-butadiene rubber. The inclusion of 60 mass% or more of natural rubber and 40 mass% or less of non-oil extended styrene-butadiene rubber in the rubber component in the coating rubber includes can contribute to the low rolling resistance characteristic when the carcass ply (PET fiber-rubber composite) is applied to a tire.

The natural rubber may be modified. When the natural rubber is modified, it is preferably a modified natural rubber having a nitrogen content of 0.1 to 0.3 mass%, for example. It is also preferable that the modified natural rubber is one from which protein has been removed by a centrifugation process, an enzyme treatment, or a urea treatment. Furthermore, it is preferable that the phosphorus content in the modified natural rubber is more than 200 ppm and 900 ppm or less.

In addition to the above-described natural rubber and non-oil extended SBR, the rubber component may also include various synthetic rubbers or non-diene rubbers, such as polyisoprene rubber (IR), polybutadiene rubber (BR), acrylonitrile-butadiene copolymer rubber (NBR), isoprene-isobutylene copolymer rubber (IIR), ethylene-propylene-diene copolymer rubber (EPDM), halogenated butyl rubber (HR), and chloroprene rubber (CR), for example.

Furthermore, it is preferable that the coating rubber contains 30 to 60 parts by mass of carbon black with a nitrogen adsorption specific surface area ($N_2SA$) of 60 $m^2/g$ or less, per 100 parts by mass of the rubber component.

By including carbon black with an $N_2SA$ of 60 $m^2/g$ or less in the coating rubber, it is possible to suppress the degradation of rolling resistance when applied to a tire while maintaining the high strength of the carcass ply. From a similar perspective, it is more preferable that the $N_2SA$ of the carbon black is 45 $m^2/g$ or less.

By adjusting the content of the carbon black in the coating rubber to 30 parts by mass or more per 100 parts by mass of the rubber component, the strength of the carcass ply (PET fiber-rubber composite) can be enhanced. By adjusting the content of the content of carbon black to 60 parts by mass or less per 100 parts by mass of the rubber component, it is possible to suppress the degradation of rolling resistance when applied to a tire as a carcass ply. From a similar perspective, it is more preferable that the content of carbon black is 35 to 45 parts by mass per 100 parts by mass of the rubber component.

The carbon black may also be recycled carbon black. In this specification, "recycled carbon black" refers to carbon black obtained by recovering carbon black from waste materials subjected to recycling. Examples of such waste

materials subjected to recycling include rubber products containing carbon black, particularly vulcanized rubber products, represented by used rubber and used tires, as well as waste oil. Recycled carbon black differs from carbon black produced directly from hydrocarbons such as petroleum or natural gas, that is, carbon black that is not recycled. It should be noted that "used" in this context includes not only materials that were discarded after actual use, but also materials that were manufactured but discarded without actual use.

In addition to the rubber component and carbon black described above, the coating rubber may appropriately include additives commonly used in the rubber industry, such as fillers (e.g., silica), vulcanizing agents, vulcanization accelerators, bismaleimide compounds, softeners, stearic acid, zinc oxide, resins, waxes, and oils, for example, as long as the effects of the present disclosure are not compromised.

(Physical Properties, etc. of Carcass Ply)

The carcass ply 9 of the pneumatic tire of the present embodiment is not particularly limited as long as it has a total gauge of 1.2 mm or less and satisfies the above formula (2). However, from the perspective of achieving more excellent strength, it is preferable that the tensile strength thereof is higher than 2300 N/cm. The tensile strength of the carcass ply (N/dm) is calculated as the tensile tenacity of a single cord measured according to ASTM D885 multiplied by the number of cords per 10 cm width. When the tensile strength of the carcass ply is within this range, the cut resistance and high fuel efficiency of the pneumatic tire are effectively achieved in a well-balanced manner.

From the perspective of high-speed durability of the tire, the inter-cord spacing between the PET fiber cords in the carcass ply is preferably 0.15 mm or more, and more preferably 0.17 mm or more. Furthermore, from the perspective of maintaining the plunger energy, the diameter of a PET fiber cord is preferably 0.45 mm or less, and more preferably 0.40 mm or less.

Additionally, the total gauge of the carcass ply is preferably 1.2 mm or less, and particularly preferably 1.0 mm or less.

This is because, by maintaining the total gauge of the carcass ply at 1.2 mm or less, the carcass ply can be made lighter, thereby more effectively suppressing the degradation of rolling resistance when applied to a tire.

It should be noted that the total gauge of the carcass ply, as illustrated in FIG. 2, refers to the thickness T of the carcass ply when cut on a plane perpendicular to the direction where the cords extend.

As described above, the carcass ply for the pneumatic tire of the present embodiment is required to satisfy the above formula (2), and preferably satisfies the above formula (2)'.

As the value of A (the cord strength $\times$ the fiber occupancy rate) in the above formula (2) increases, the strength of the carcass ply is increased. As the value of B (tan$\delta$ of the coating rubber $\times$ the rubber occupancy rate) decreases, the rolling resistance is reduced.

As described above, by adjusting the value of (A/B) / cord total fineness to 0.3 or more (adjusting so that the above formula (2) is satisfied), it is possible to achieve a high strength while reducing the number of cords and lowering the rolling resistance.

With regard to the carcass ply, it is preferable that the tan$\delta$ of the coating rubber measured using a spectrometer (manufactured by Ueshima Seisakusho Co., Ltd.) under conditions of a temperature of 24°C, a strain of 1%, and a frequency of 52 Hz is 1.5 or less, more preferably 1.0 or less, from the perspective of reducing rolling resistance.

The manufacturing method of the carcass ply for the pneumatic tire of the present embodiment is not particularly limited and can be produced by known methods.

As a method for coating the PET fiber cords with the coating rubber, the following method can be used, for example.

A predetermined number of PET fiber cords are arranged in a reed screen-like shape. Unvulcanized rubber sheets that are made from the coating rubber (rubber composition) and have a certain thickness are placed on both the top and bottom of the PET fiber cords so that the PET fiber cords are sandwiched by the unvulcanized rubber sheets. Thereafter, vulcanization is carried out at a temperature of approximately 160°C for about 20 minutes to obtain the carcass ply.

<Manufacturing Method of Pneumatic Tire>

The pneumatic tire of the present embodiment can be obtained by molding an uncured rubber composition, an uncured treat (a cord-rubber composite in which cords are coated with rubber), etc., followed by vulcanization, depending on the type of tire to be applied. Alternatively, the pneumatic tire may also be obtained by molding semi-vulcanized rubber that has undergone a pre-vulcanization step, instead of using an uncured rubber composition, followed by final vulcanization.

The members other than the tread rubber layer and the carcass ply of the pneumatic tire of the present embodiment are not particularly limited, and known materials can be used for other components.

The pneumatic tire may be filled with ordinary air or air adjusted in partial pressure of oxygen and may also be filled with an inert gas such as nitrogen, argon, or helium.

EXAMPLES

The present disclosure will be described in more detail with reference to the following examples, but the present disclosure is not limited to the examples below.

<Analysis Methods for Rubber Component>

The glass transition temperature (Tg) and bound styrene content of styrene-butadiene rubber (SBR) were measured using the following methods. The SP value (solubility parameter) of natural rubber (isoprene skeleton rubber) and styrene-butadiene rubber (SBR) was calculated according to the Fedor method.

(1) Glass Transition Temperature (Tg)

The synthesized styrene-butadiene rubber (SBR) was used as a sample, and the glass transition temperature was determined using a DSC250 manufactured by TA Instruments by recording the DSC curve under a helium flow of 50 mL/min while it was heated from -100°C at a rate of 20°C/minute. The peak top (inflection point) of the DSC differential curve was defined as the glass transition temperature.

(2) Bound Styrene Content

The synthesized styrene-butadiene rubber (SBR) was used as a sample, and 100 mg of the sample was diluted with 100 mL of chloroform to dissolve the SBR, thereby preparing a measurement sample. The bound styrene content (mass%) per 100 mass% of the sample was determined based on the amount of UV absorption by the phenyl group of styrene at a UV absorption wavelength of approximately 254 nm. The measurement device used was a spectrophotometer UV-2450 manufactured by Shimadzu Corporation.

<Analysis Methods for Resin Component>

The softening point and weight-average molecular weight of the resin component were measured using the following methods. The SP value (solubility parameter) of the resin component was calculated using the Fedor method.

(3) Softening Point

The softening point of the resin component was measured according to JIS-K2207-1996 (Ring and Ball Method).

(4) Weight-Average Molecular Weight

The weight-average molecular weight of the resin component was measured by gel permeation chromatography (GPC) under the following conditions, and the polystyrene-equivalent weight-average molecular weight (Mw) was calculated.

- Column temperature: 40°C
- Injection volume: 50 μL
- Carrier and flow rate: Tetrahydrofuran at 0.6 mL/min
- Sample preparation: About 2.5 mg of the resin component was dissolved in 10 mL of tetrahydrofuran

<Preparation of Rubber Composition>

The rubber compositions of the examples and comparative examples were prepared by compounding and kneading each component according to the formulation summarized in Table 1. It should be noted that the compounding amounts of natural rubber, SBR, and resin components in each example and comparative example are summarized in Table 3.

[Table 1]

| | Amount (parts by mass) |
|---|---|
| Natural rubber *1 | Varied |
| SBR *2 | Varied |
| Filler *3 | 65.0 |
| Resin component *4 | Varied |
| Silane coupling agent *5 | 6.5 |
| Antioxidant *6 | 2.0 |
| Wax *7 | 2.0 |
| Zinc white *8 | 2.0 |
| Vulcanization accelerator A *8 | 0.8 |
| Vulcanization accelerator B *9 | 1.7 |
| Sulfur | 1.4 |

**[0233]** *1 Natural Rubber: TSR#20, SP value = 8.20 $(cal/cm^3)^{1/2}$
*2 SBR: Hydrocarbyloxy silane compound-modified styrene-butadiene rubber synthesized by the method described below, Tg = -65°C, SP value = 8.65 $(cal/cm^3)^{1/2}$
*3 Filler: Silica, trade name "Nipsil AQ" manufactured by Tosoh Silica Co., Ltd.
*4 Resin component: Hydrogenated Cs-based resin, trade name "Impera® E1780" manufactured by Eastman Company, softening point = 130°C, weight-average molecular weight (Mw) = 909 g/mol, SP value = 8.35 $(cal/cm^3)^{1/2}$
*5 Silane coupling agent: trade name "Si75" manufactured by Evonik Degussa Japan Co., Ltd.
*6 Antioxidant: trade name "NOCRAC 6C" manufactured by Ouchi Shinko Chemical Industrial Co., Ltd.
*7 Wax: trade name "Ozoace-0701" manufactured by Nippon Seiro Co., Ltd.
*8 Vulcanization accelerator A: "NOCCELER DM-P" manufactured by Ouchi Shinko Chemical Industrial Co., Ltd.
*9 Vulcanization accelerator B: trade name "Sanceler NS-G" manufactured by Sanshin Chemical Industry Co., Ltd.

<Synthesis Method of SBR (*2)>

In an 800 mL pressure-resistant glass vessel that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-ditetrahydrofurylpropane was added, and 0.8 mmol of n-butyllithium was added. Subsequently, the mixture was polymerized for 1.5 hours at 50°C. Next, 0.72 mmol of N,N-bis(trimethylsilyl)-3-[diethoxy(methyl)silyl]propylamine was added as a modifying agent to the polymerization reaction system when the polymerization conversion ratio reached nearly 100%, and a denaturation reaction was carried out for 30 minutes at 50°C. Subsequently, the reaction was stopped by adding 2 mL of an isopropanol solution containing 5 mass% of 2,6-di-t-butyl-p-cresol (BHT), and the result was dried with a regular method to obtain an SBR (modified SBR).

A measurement of the microstructure of the obtained modified SBR indicated that the bound styrene content was 10 mass% and the glass transition temperature (Tg) was -65°C.

<Production and Evaluation of Carcass Ply>

A carcass ply was produced by coating PET fiber cords with a coating rubber under the conditions summarized in Table 2. The specifications of PET fiber cords, the main compounding components of the coating rubber, and the conditions and evaluation of the produced carcass ply are summarized in Table 2.

(5) Ply Strength

The ply strength was calculated using the following formula, based on the strength per PET fiber cord and the number of PET fiber cords per unit length, measured in accordance with ASTM D885. A higher value indicates greater ply strength.

Formula: Ply Strength (N/dm) = strength per PET fiber cord (N) × number of PET fiber cords per unit length (cords/10 cm)

The evaluation results were indicated as index values taking the result of Carcass Ply 1 as 100. A larger index value indicates a higher ply strength.

(6) tanδ of Coating Rubber

The tanδ of the coating rubber was measured using a spectrometer (manufactured by Ueshima Seisakusho Co., Ltd.) under the conditions of a temperature of 24°C, a strain of 1%, and a frequency of 52 Hz to determine the tanδ (loss tangent) of the coating rubber.

[Table 2]

| | | Carcass ply 1 | Carcass ply 2 | Carcass ply 3 |
|---|---|---|---|---|
| Coating rubber | NR (parts by mass) | 68 | 68 | 70 |
| | SBR1 *10 (parts by mass) | - | - | 30 |
| | SBR2 (SBR components) *11 (parts by mass) | 44(32) | 44(32) | - |
| | CB *12 (parts by mass) | - | - | 45 |
| | CB *13 (parts by mass) | 45 | 45 | - |
| PET fiber cord | Raw yarn fineness (dtex) | 1670 | 1100 | 1100 |
| | Yarn strength (cN/dtex) | 7.72 | 8.01 | 8.01 |
| | Cord structure | 1670 dtex/2 | 1100 dtex/2 | 1100 dtex/2 |
| | Cord total fineness (dtex) | 3340 | 2200 | 2200 |
| | Number of first twists × number of second twists (turns per 10cm) | 39×39 | 47×47 | 47×47 |
| | cord strength (N) | 227 | 165 | 165 |
| | Number of cords (/5cm) | 51 | 71 | 71 |
| | Modulus (N/%) | 881 | 886 | 886 |
| | Inter-cord spacing (a) (mm) | 0.33 | 0.18 | 0.18 |
| | Diameter of cord (b) (mm) | 0.660 | 0.530 | 0.530 |
| | Porosity a/(a+b) | 0.33 | 0.25 | 0.25 |
| Carcass ply | Fiber occupancy rate | 0.318 | 0.379 | 0.379 |
| | Total gauge (mm) | 1.09 | 0.82 | 0.82 |
| | Rubber occupancy rate | 0.682 | 0.621 | 0.621 |
| | tan δ of coating rubber | 0.15 | 0.15 | 0.10 |
| | A: Cord strength × fiber occupancy | 72.22 | 62.56 | 62.56 |
| | B: tan δ × rubber occupancy of coating rubber | 0.10 | 0.09 | 0.06 |
| | (A/B) / cord total fineness | 0.21 | 0.31 | 0.46 |
| Evaluations | Ply strength (N/dm) | 23018 | 23265 | 23265 |
| | Ply strength (index) | 100 | 101 | • 0 |

*10 SBR1: Solution-polymerized SBR, non-oil extended
*11 SBR2: Emulsion-polymerized SBR, 27.3 mass% oil extended
*12 CB1: GPF-grade carbon black with an $N_2SA$ of 28 $m^2/g$ and a DBP of 89 ml/100 g
*13 CB2: HAF-grade carbon black with an $N_2SA$ of 71 $m^2/g$ and a DBP of 103 ml/100 g

<Production and Evaluation of Vulcanized Rubber>

The resulting rubber compositions of the examples and comparative examples were vulcanized to obtain

vulcanized rubber test specimens. The cut resistance, wet braking performance, and high fuel efficiency of the obtained vulcanized rubber test specimens were evaluated using the following methods. The results are summarized in Table 3.

(7) Evaluation of Cut Resistance

The storage modulus (E') of the test specimens was measured using a rheometric measurement device (manufactured by Rheometrics, Inc.) under the following conditions. The evaluation results were indicated as index values taking the storage modulus (E') of Comparative Example 1 as 100. The index of the cut resistance was calculated based on the calculated storage modulus (E') and the index of the ply strength of the carcass ply using the following formula.

Index of cut resistance = calculated storage modulus (E') + index of ply strength of carcass ply - 100

In other words, the index of the cut resistance represents the sum of the improvement margin of the calculated storage modulus (E'), the improvement margin of the index of the ply strength of carcass ply, and 100. If any of the calculated value or index is smaller relative to the reference, the improvement margin takes a negative value. A higher index value of the cut resistance indicates better cut resistance.

(8) Evaluation of Wet Braking Performance

The friction coefficient of the test specimens on a wet asphalt surface was measured using a portable friction tester. The evaluation results were indicated as index values taking the friction coefficient of Comparative Example 1 as 100. A higher index value indicates a higher friction coefficient, meaning better wet braking performance.

(9) Evaluation of High Fuel Efficiency

The loss tangent (tanδ) of the test specimens was measured using a rheometric measurement device (manufactured by Rheometrics, Inc.) under the conditions of a temperature of 50°C, a strain of 1%, and a frequency of 52 Hz. The evaluation results were indexed taking the reciprocal of the tanδ value of Comparative Example 1 as 100. A larger index value indicates smaller tanδ, indicating more excellent high fuel efficiency.

[Table 3]

| | | | Example 1 | Example 2 | Example 3 | Example 4 | Comparative Example 1 | Comparative Example 2 | Comparative Example 3 |
|---|---|---|---|---|---|---|---|---|---|
| Tread rubber layer | Natural rubber *1 | parts by mass | 30 | 30 | 30 | 30 | 70 | 70 | 70 |
| | SBR *2 | parts by mass | 70 | 70 | 70 | 70 | 30 | 30 | 30 |
| | Resin component *4 | parts by mass | 15 | 30 | 15 | 30 | 15 | 30 | 30 |
| | Mass ratio of resin component/natural rubber | - | 0.50 | 1.00 | 0.50 | 1.00 | 0.21 | 0.43 | 0.43 |
| Carcass ply | Type | - | Carcass ply 2 | Carcass ply 2 | Carcass ply 3 | Carcass ply 3 | Carcass ply 1 | Carcass ply 1 | Carcass ply 2 |
| Tire performance | Wet braking performance | Index | 109 | 113 | 109 | 113 | 100 | 109 | 109 |
| | High fuel efficiency | Index | 107 | 103 | 107 | 103 | 100 | 97 | 99 |
| | Cut Resistance | Index | 99 | 98 | 99 | 98 | 100 | 97 | 99 |
| | Overall performance | Index | 314 | 314 | 314 | 314 | 300 | 303 | 307 |

*1, *2, and *4 are the same as *1, *2, and *4 in Table 1.

Table 3 indicates that, compared to the comparative examples, Examples 1 to 4 exhibited improved wet braking performance and low fuel efficiency, while also suppressing the reduction in cut resistance, leading to improvements in the overall performance. On the other hand, Comparative Example 3 did not satisfy the condition: the mass ratio of the resin component/isoprene skeleton rubber mass ratio ≥ 0.5. As a result, when combined with a carcass ply containing the specified PET fiber cords, it only improved wet braking performance, with a limited improvement in the overall performance.

INDUSTRIAL APPLICABILITY

According to the present disclosure, it is possible to provide a tire that has improved wet braking performance and high fuel efficiency without reducing the cut resistance.

REFERENCE SIGNS LIST

1: Pneumatic tire, 2: Bead portion, 3: Sidewall portion, 4: Tread member, 5: Carcass, 6: Belt, 6A, 6B: Belt layers, 7: Bead core, 8: Tread rubber layer, 9: Carcass ply, 10: PET fiber cord, 11: PET fiber, 20: Coating rubber

## Claims

**1.** A pneumatic tire comprising a tread rubber layer located at an outermost surface of a tread member and a carcass ply that is formed by covering PET fiber cords with a coating rubber and is located inward of the tread rubber layer in a tire radial direction,

wherein the tread rubber layer comprises a rubber component, a resin component, and a filler,
the rubber component comprises an isoprene skeleton rubber and a styrene-butadiene rubber,
a glass transition temperature of at least one type of the styrene-butadiene rubber is lower than -40°C,
the resin component has a difference of an SP value relative to an SP value of the isoprene skeleton rubber of 1.40 $(cal/cm^3)^{1/2}$ or less,
the tread rubber layer satisfies the following formula (1):

$$\text{a mass ratio of the resin component / the isoprene skeleton rubber} \geq 0.5 \quad (1),$$

a total gauge of the carcass ply is 1.2 mm or less,
the carcass ply satisfies the following formula (2):

$$(A/B) \text{ / a cord total fineness} \geq 0.3 \quad \ldots (2),$$

where A is defined as: a cord strength (N) × a fiber occupancy rate,
the fiber occupancy rate is defined as: a cross-sectional area of a PET fiber cord ($mm^2$) / (the total gauge of the carcass ply (mm) × (a diameter of a PET fiber cord (mm) + an inter-cord spacing of the PET fiber cords (mm))), and
B is defined as: tanδ of the coating rubber × a rubber occupancy rate,
the rubber occupancy rate is defined as: (1 - the fiber occupancy rate), and
the cord total fineness is a sum (dtex) of finenesses of PET fibers forming a cord.

**2.** The pneumatic tire according to claim 1, wherein the resin component has a softening point higher than 110°C and a polystyrene-equivalent weight-average molecular weight of 200 to 1600 g/mol.

**3.** The pneumatic tire according to claim 1, wherein the resin component comprises at least one selected from the group consisting of hydrogenated $C_5$-based resins, hydrogenated $C_5$-$C_9$-based resins, hydrogenated dicyclopentadiene-based resins, and hydrogenated terpene-based resins.

**4.** The pneumatic tire according to claim 1, wherein the styrene-butadiene rubber is modified with a modifier having a functional group containing a nitrogen atom and an alkoxy group.

**5.** The pneumatic tire according to claim 1, wherein the cord strength of the PET fiber cord is 160 N or more.

**6.** The pneumatic tire according to claim 1, wherein a tensile strength of the carcass ply is more than 2300 N/cm.

**7.** The pneumatic tire according to claim 1, wherein the fineness of the PET fiber cord is 1100/2 to 2000/2 dtex.

**8.** The pneumatic tire according to claim 1, wherein the carcass ply satisfies the following formula (2)':

$$(A/B) / \text{the cord total fineness} \geq 0.45 \quad \ldots (2)'.$$

FIG. 1

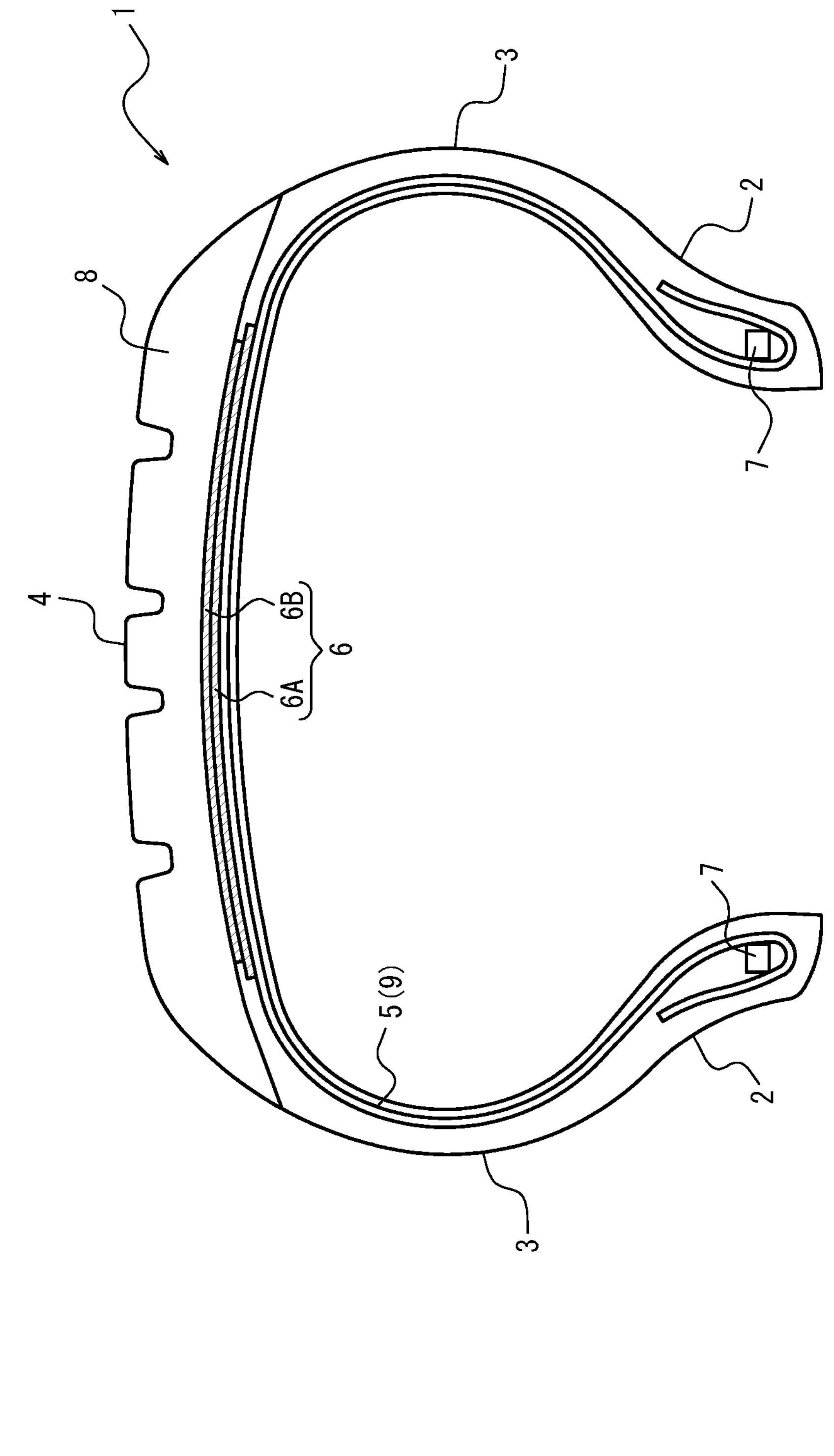

FIG. 2

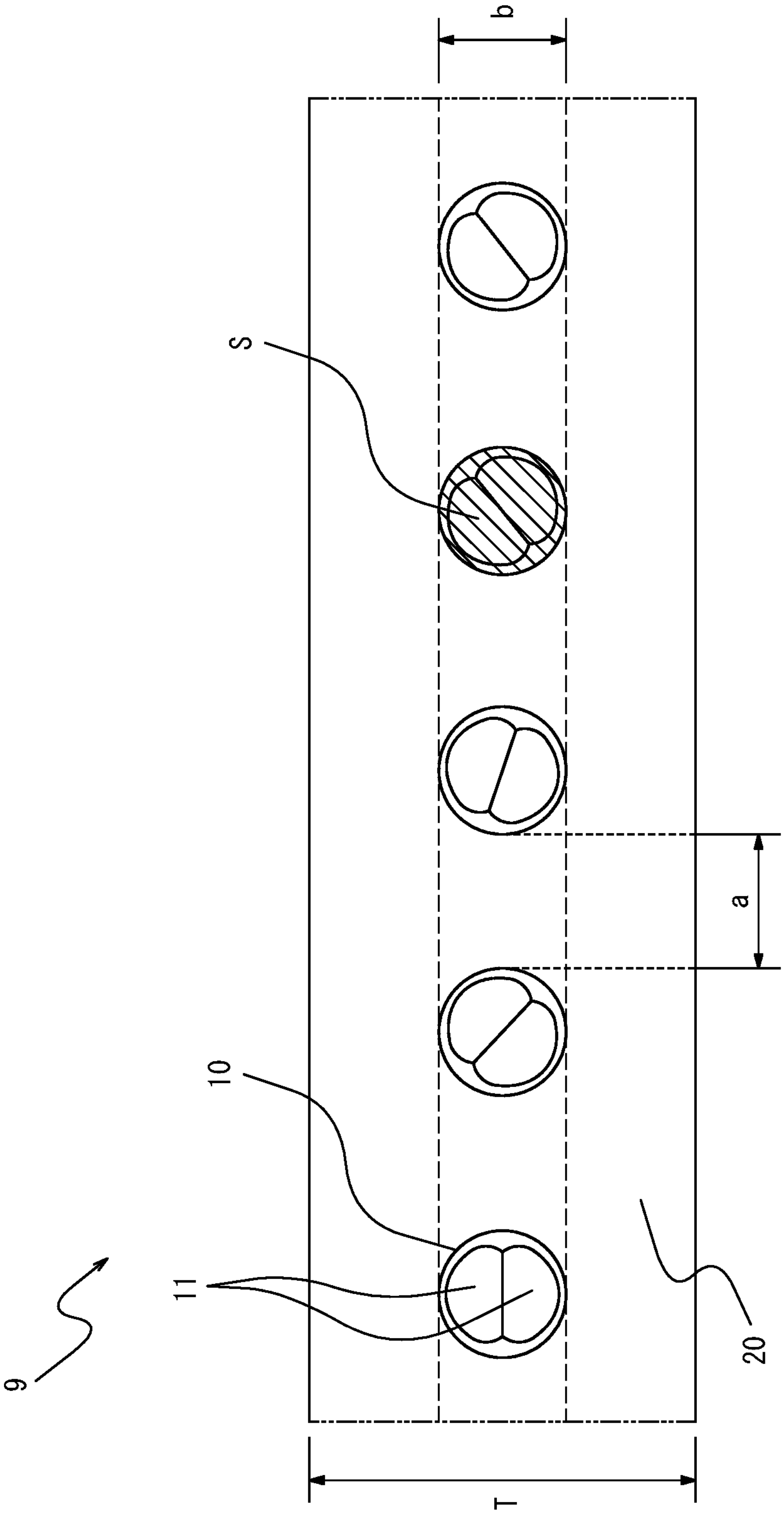

## INTERNATIONAL SEARCH REPORT

International application No. **PCT/JP2023/041877**

**A. CLASSIFICATION OF SUBJECT MATTER**

***B60C 9/00***(2006.01)i; ***B60C 1/00***(2006.01)i; ***C08L 7/00***(2006.01)i; ***C08L 9/06***(2006.01)i; ***C08L 15/00***(2006.01)i
FI: B60C9/00 B; C08L7/00; C08L9/06; C08L15/00; B60C1/00 A

According to International Patent Classification (IPC) or to both national classification and IPC

**B. FIELDS SEARCHED**

Minimum documentation searched (classification system followed by classification symbols)

B60C9/00; B60C1/00; C08L7/00; C08L9/06; C08L15/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-131648 A (SUMITOMO RUBBER INDUSTRIES, LTD.) 08 August 2019 (2019-08-08)<br>claims, paragraph [0080], examples 1-8 | 1-8 |
| A | JP 2005-330319 A (THE YOKOHAMA RUBBER CO., LTD.) 02 December 2005 (2005-12-02)<br>paragraph [0027] | 1-8 |
| A | WO 2016/171020 A1 (SUMITOMO RUBBER INDUSTRIES, LTD.) 27 October 2016 (2016-10-27)<br>paragraph [0093] | 1-8 |
| A | WO 2017/018386 A1 (SUMITOMO RUBBER INDUSTRIES, LTD.) 02 February 2017 (2017-02-02)<br>paragraph [0064] | 1-8 |
| A | JP 2021-94916 A (BRIDGESTONE CORPORATION) 24 June 2021 (2021-06-24)<br>claims, fig. 1-4 | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (July 2022)

**INTERNATIONAL SEARCH REPORT**

International application No.
**PCT/JP2023/041877**

**C. DOCUMENTS CONSIDERED TO BE RELEVANT**

| Category* | Citation of document, with indication, where appropriate, of the relevant passages | Relevant to claim No. |
|---|---|---|
| A | JP 10-95207 A (BRIDGESTONE CORPORATION) 14 April 1998 (1998-04-14) claims, examples 1-5 | 1-8 |
| A | JP 2003-89303 A (TOYO TIRE & RUBBER CO., LTD.) 25 March 2003 (2003-03-25) claims, examples 1-3 | 1-8 |
| A | WO 2011/107543 A1 (SOCIETE DE TECHNOLOGIE MICHELIN) 09 September 2011 (2011-09-09) claims, paragraph [0056], fig. 2 | 1-8 |
| A | WO 2008/010531 A1 (BRIDGESTONE CORPORATION) 24 January 2008 (2008-01-24) claims, fig. 1 | 1-8 |

Form PCT/ISA/210 (second sheet) (July 2022)

**INTERNATIONAL SEARCH REPORT**
**Information on patent family members**

International application No.
**PCT/JP2023/041877**

| Patent document cited in search report | Publication date (day/month/year) | Patent family member(s) | Publication date (day/month/year) |
|---|---|---|---|
| JP 2019-131648 A | 08 August 2019 | (Family: none) | |
| JP 2005-330319 A | 02 December 2005 | (Family: none) | |
| WO 2016/171020 A1 | 27 October 2016 | US 2018/0105683 A1<br>paragraph [0116]<br>EP 3281979 A1<br>CN 107429008 A | |
| WO 2017/018386 A1 | 02 February 2017 | US 2018/0362741 A1<br>paragraph [0068]<br>EP 3305843 A1<br>CN 107849315 A | |
| JP 2021-94916 A | 24 June 2021 | (Family: none) | |
| JP 10-95207 A | 14 April 1998 | (Family: none) | |
| JP 2003-89303 A | 25 March 2003 | (Family: none) | |
| WO 2011/107543 A1 | 09 September 2011 | US 2011/0214791 A1<br>claims, paragraph [0059], fig. 2<br>EP 2542428 A1<br>FR 2957021 A<br>CN 102781685 A<br>BR 112012022374 A | |
| WO 2008/010531 A1 | 24 January 2008 | US 2009/0288751 A1<br>claims, fig. 1<br>EP 2042347 A1<br>CN 101516647 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015079703 A1
- WO 2003046020 A1
- JP 2007217562 A
- JP 2007 A
- JP 217562 A
- JP 2019038728 A
- JP 2023040157 A
- JP 2023030762 A
- WO 2022130879 A1

### Non-patent literature cited in the description

- **R. R. HAMPTON**. *Analytical Chemistry*, 1949, vol. 21, 923